# EUROPÄISCHE PATENTSCHRIFT

(11) **EP 2 363 910 B1**
(45) Veröffentlichungstag und Bekanntmachung des Hinweises auf die Patenterteilung: **20.09.2017**
(21) Anmeldenummer: 11155743.5
(22) Anmeldetag: 24.02.2011
(51) Int. Cl.: H01M 8/243, H01M 8/0247, H01M 8/0206, H01M 8/0202, H01M 8/02, H01M 8/00, H01M 8/124

(54) **Brennstoffzellensystem mit verbesserter elektrischer Kontaktierung**
Fuel cell system with improved electric contacting
Système de cellules combustibles ayant une mise en contact électrique améliorée

(30) Priorität: 26.02.2010 DE 102010002372
(43) Veröffentlichungstag der Anmeldung: 07.09.2011
(73) Patentinhaber: Robert Bosch GmbH, 70442 Stuttgart (DE)
(72) Erfinder: Schulze, Andreas, 70176 Stuttgart (DE); Baumann, Frank, 74395 Mundelsheim (DE); Goehler, Jan, 70199 Stuttgart (DE); Thoben, Birgit, 70839 Gerlingen (DE); Satet, Raphaelle, 5000 AM Tilburg (NL); Eisele, Ulrich, 70199 Stuttgart (DE); Loibl, Thomas, 87561 Oberstdorf (DE); Bluthard, Alexander, 70469 Stuttgart (DE); Oberle, Juergen, 71065 Sindelfingen (DE); Heeren, Imke, 70199 Stuttgart (DE); Schoenbauer, Stefan, 70197 Stuttgart (DE)

(56) Entgegenhaltungen:
- EP-A1- 0 076 019
- WO-A1-2007/136080
- WO-A2-2007/076440
- WO-A2-2007/089002
- DE-C1- 4 410 711
- US-A- 4 827 606
- US-A1- 2007 141 424

## Beschreibung

Die vorliegende Erfindung betrifft ein Brennstoffzellensystem, ein Kontaktelement zur elektrischen Kontaktierung von Brennstoffzellen sowie ein Verfahren zur elektrischen Kontaktierung eines Brennstoffzellensystems.

### Stand der Technik

Brennstoffzellen können einen rohrförmigen oder planaren Trägerkörper aufweisen. Aus WO 2007/136080 ist ein Brennstoffzellensystem bekannt, welches eine planare Brennstoffzellenanordnung beinhaltet. Die Brennstoffzellen der hier interessierenden Art weisen einen rohrförmigen Trägerkörper auf und sind daher aufgrund ihrer geometrischen Ausgestaltung gegen planar ausgebildete Brennstoffzellen abzugrenzen. Wie in US 2007/0141424 A1 gezeigt, können_rohrförmige Brennstoffzellen, auch tubulare Brennstoffzellen genannt, beidseitig offen ausgeführt sein, sodass Brenngas durch die rohrförmige Brennstoffzelle hindurch geleitet wird. Es ist jedoch auch möglich, dass Brennstoffzellen mit einem rohrförmigen Trägerkörper an einer Endseite geschlossen ausgeführt werden, wobei Brenngas über eine Lanze innenseitig in die Brennstoffzelle geleitet wird.

Üblicherweise werden Brennstoffzellen mit einem rohrförmigen Trägerkörper au-ßenseitig mit Luft umspült, wobei das Brenngas innenseitig die Wandung des Trägerkörpers umströmt.

Unter Brennstoffzellen mit rohrförmigem Trägerkörper wird unter anderem zwischen Elektrolyt geträgerten, Elektroden geträgerten und inert geträgerten Brennstoffzellen unterschieden.

Bei Elektrolyt geträgerten Brennstoffzellen mit rohrförmigem Trägerkörper dient der Trägerkörper auch als Elektrolyt. Bei derartigen Brennstoffzellen sind herkömmlicherweise außenseitig und innenseitig des Trägerkörpers Elektroden aufgebracht, wobei herkömmlicherweise außenseitig die Kathode und innenseitig die Anode vorgesehen ist.

Bei inert geträgerten Brennstoffzellen mit rohrförmigem Trägerkörper dient der Trägerkörper nicht als Elektrolyt. Bei derartigen Brennstoffzellen ist herkömmlicherweise außenseitig mindestens eine Elektroden-Elektrolyt-Einheit auf den Trägerkörper aufgebracht, welche eine Kathode, eine Anode und einen dazwischen angeordneten Elektrolyten umfasst, wobei herkömmlicherweise die Kathode der Elektroden-Elektrolyt-Einheit an den Trägerkörper angrenzt und die Anode innenseitig vorgesehen ist.

### Offenbarung der Erfindung

Gegenstand der vorliegenden Erfindung ist ein Brennstoffzellensystem, umfassend ein Trägersubstrat, zum Beispiel eine Bodenplatte, und mindestens eine auf das Trägersubstrat aufgebrachte Brennstoffzelle mit einem rohrförmigen Trägerkörper und mindestens einer Elektroden-Elektrolyt-Einheit, welche zwei Elektroden und einen dazwischen angeordneten Elektrolyten umfasst, wobei eine der Elektroden die Kathode und die andere Elektrode die Anode bildet.

Erfindungsgemäß umfasst das Brennstoffzellensystem weiterhin eine Vielzahl von auf dem Trägersubstrat aufgebrachten, elektrisch isolierenden Isolationselementen und mindestens ein auf mindestens eines der Isolationselemente aufgebrachtes, metallisches Kontaktelement zur elektrischen Kontaktierung mindestens einer der Elektroden. Insbesondere kann das Brennstoffzellensystem mindestens ein auf das Trägersubstrat aufgebrachtes, elektrisch isolierendes Isolationselement und mindestens ein auf mindestens eines der Isolationselemente aufgebrachtes, zum Trägersubstrat beabstandet angeordnetes, metallisches Kontaktelement zur elektrischen Kontaktierung mindestens einer der Elektroden umfassen.

Unter einer beabstandeten Anordnung von zwei Bauteilen, beispielsweise einem Kontaktelement und zum Trägersubstrat, kann im Sinn der vorliegenden Erfindung insbesondere verstanden werden, dass zwischen den beiden Bauteilen ein Zwischenraum vorliegt, insbesondere welcher auch nicht von anderen Bauteilen eingenommen wird.

Die Isolationselemente umfassen vorzugsweise mindestens ein elektrisch isolierendes, hochtemperaturfestes (bis 800 °C) Material, beispielsweise ein keramisches Material, zum Beispiel Aluminiumoxid.

Im Rahmen einer Ausführungsform umfassen die Isolationselemente mindestens eine auf das Trägersubstrat aufgebrachte elektrisch isolierende, keramische Isolationsschicht, insbesondere einen Schichtaufbau aus mindestens einer auf das Trägersubstrat aufgebrachten elektrisch isolierenden, keramischen Isolationsschicht und mindestens einer auf der Isolationsschicht aufgebrachten metallischen Kontaktschicht. Durch die Isolationsschicht kann dabei die elektrische Isolation bezüglich des Trägersubstrates gewährleistet werden. Durch die Kontaktschicht kann dabei das Verschweißen der Kontaktelemente mit den Isolationselementen ermöglicht werden. Die elektrisch isolierenden Eigenschaften der Isolationselemente können dabei auf den elektrisch isolierenden Eigenschaften der keramischen Isolationsschicht beruhen.

Die Isolationselemente sind vorzugsweise auf eine kleine Fläche beschränkt und insbesondere über einen Materialschluss mit dem Trägersubstrat verbunden.

Die Kontaktelemente sind vorzugsweise aus einem elektrisch leitenden hochtemperaturfesten (bis 800 °C) metallischen Material, beispielsweise Nickel, ausgebildet und vorzugsweise über einen Materialschluss mit den Isolationselementen verbunden.

Durch das erfindungsgemäße Kontaktierungskonzept kann vorteilhafterweise eine für die Massenproduktion geeignete und beständige elektrische Kontaktierung von Brennstoffzelle ermöglicht werden.

Durch die Kombination von mindestens einem auf das Trägersubstrat aufgebrachten, elektrisch isolierenden, Isolationselement und mindestens einem auf mindestens eines der Isolationselemente aufgebrachten metallischen Kontaktelement wird vorteilhafterweise auf einfache Weise eine elektrische Isolierung des Kontaktelements bezüglich des Trägersubstrats erreicht. Dies ist insbesondere deshalb vorteilhaft, da kostengünstige Trägersubstrate herkömmlicherweise metallisch und damit elektrisch leitend sind. Metallische Kontaktelemente bieten zudem den Vorteil, dass diese mit geringerem Kostenaufwand appliziert werden können. Weiterhin zeichnen sich metallische Kontaktelemente durch eine hohe elektrische Leitfähigkeit aus. Dadurch, dass die Isolationselemente schon vor der Montage der Brennstoffzellen und Kontaktelemente auf das Trägersubstrat aufgebracht werden können, können auch diese mit geringem Kostenaufwand appliziert werden. Zudem können Isolationselemente, insbesondere durch das darin enthaltene keramische Material, zum Beispiel Aluminiumoxid, eine geringe Wärmeleitfähigkeit aufweisen, wodurch die Temperaturbelastung für die darauf aufgebrachten metallischen Kontaktelemente minimiert werden kann. Durch eine beabstandete Anordnung der Kontaktelemente bezüglich des Trägersubstrats kann vorteilhafterweise neben einer weiteren Vereinfachung der elektrischen Isolierung bezüglich des Trägersubstrats erreicht werden, dass das metallische Kontaktelement einer verminderten Temperatur ausgesetzt ist. Durch die Verbindung der Kontaktelemente mit den Isolationselementen kann zudem die mechanische Stabilität der Kontaktelemente erhöht werden.

Bei den Brennstoffzellen kann es sich insbesondere um Festoxidbrennstoffzellen auch SOFC's (Englisch: Solid Oxide Fuel Cell) handeln.

Dabei können die Brennstoffzellen sowohl Elektrolyt und/oder Elektroden geträgerte Brennstoffzellen als auch inert geträgerte Brennstoffzellen sein.

Unter einer Elektrolyt geträgerten Brennstoffzelle mit rohrförmigem Trägerkörper kann insbesondere eine Brennstoffzelle verstanden werden, welche einen gasdichten, rohrförmigen Grundkörper aufweist, welcher zusätzlich zur Trägerfunktion als Elektrolyt dient. Bei derartigen Brennstoffzellen ist der Grundkörper Bestandteil der Elektroden-Elektrolyt-Einheit/en, wobei eine Elektrode, beispielsweise die Kathode, einer Elektroden-Elektrolyt-Einheit auf der Außenfläche des rohrförmigen Grundkörpers und die andere Elektrode, beispielsweise die Anode, der Elektroden-Elektrolyt-Einheit auf der Innenfläche des rohrförmigen Grundkörpers aufgebracht ist.

Unter einer Elektroden geträgerten Brennstoffzelle mit rohrförmigem Trägerkörper kann insbesondere eine Brennstoffzelle verstanden werden, welche einen rohrförmigen Grundkörper aufweist, welcher zusätzlich zur Trägerfunktion als Elektrode dient. Auch bei derartigen Brennstoffzellen ist der Grundkörper Bestandteil der Elektroden-Elektrolyt-Einheit/en.

Unter einer inert geträgerten Brennstoffzelle kann insbesondere eine Brennstoffzelle verstanden werden, welche einen porösen, rohrförmigen Grundkörper aufweist, welcher als Träger und nicht als Elektrolyt oder Elektrode dient. Bei derartigen Brennstoffzellen kann die Elektroden-Elektrolyt-Einheit/en einen schichtartigen, insbesondere sandwichartigen, Aufbau aufweisen und auf der Innenfläche oder der Außenfläche, insbesondere der Innenfläche, des rohrförmigen Grundkörpers aufgebracht sein.

Die erfindungsgemäße Kontaktierung kann besonders vorteilhaft bei Brennstoffzellen mit einem rohrförmigen Trägerkörper und einer geschlossenen Endseite Anwendung finden.

Im Rahmen einer weiteren Ausführungsform ist mindestens eines der Kontaktelemente weiterhin auf mindestens einem elektrisch leitenden, mit einer der Elektroden elektrisch verbunden Brennstoffzellenabschnitt aufgebracht. Bei dem elektrisch leitenden, mit einer der Elektroden elektrisch verbundenen Brennstoffzellenabschnitt kann es sich sowohl um einen mit einer der Elektroden elektrisch verbundenen, elektrisch leitenden Abschnitt der Brennstoffzelle, beispielsweise um ein keramisches und/oder metallisches Kontaktelement zum elektrischen Kontaktieren der Elektrode, einen so genannten Interkonnektor, oder um eine Schutzschicht, als auch um eine der Elektroden selbst handeln.

Im Rahmen einer Ausgestaltung, welche sich insbesondere für Elektrolyt und/oder Elektroden geträgerte Brennstoffzellen als vorteilhaft erwiesen hat, ist auf mindestens einer der Elektroden beziehungsweise auf den Elektroden ein keramisches Kontaktelement, beispielsweise eine elektrisch leitende, keramische Kontaktschicht, (Interkonnektor) aufgebracht, auf welche/s mindestens eines der metallischen Kontaktelemente aufgebracht ist. Dabei kontaktiert das metallische Kontaktelement das keramische Kontaktelement vorzugsweise im Fußbereich der Brennstoffzelle, das heißt in dem Bereich der Brennstoffzelle, welcher benachbart zum Trägersubstrat ist. Diese Ausgestaltung hat den Vorteil, dass keramische Kontaktelemente in Zonen hoher Temperatur und metallische Kontaktelemente in Zonen niedriger Temperatur Verwendung finden, so dass zu hohe Temperaturbelastungen für die metallischen Kontaktelemente vermieden werden können.

Im Rahmen einer weiteren Ausführungsform erstreckt sich mindestens eines der Kontaktelemente zwischen mindestens zwei Brennstoffzellen des Brennstoffzellensystems, um eine elektrische Kontaktbrücke zwischen zwei oder mehr Elektroden unterschiedlicher Brennstoffzellen zu bilden.

Im Rahmen einer weiteren Ausführungsform umfasst das Brennstoffzellensystem weiterhin mindestens eine elektrische Sammelleitung, insbesondere zwei elektrische Sammelleitungen, zum Zusammenschalten von zwei oder mehr Brennstoffzellensträngen aus zwei oder mehr untereinander zusammen geschalteten, beispielsweise in Reihe und gegebenenfalls zusätzlich zumindest teilweise parallel geschalteten, Brennstoffzellen. Vorzugsweise ist dabei mindestens eine der Sammelleitungen ebenfalls auf mindestens einem der Isolationselemente aufgebracht und vorzugsweise zum Trägersubstrat beabstandet angeordnet. Vorzugsweise erstreckt sich dabei mindestens eines der Kontaktelemente zwischen der Sammelleitung und mindestens einer der Brennstoffzellen, um eine elektrische Kontaktbrücke zwischen der Sammelleitung und einer der Elektroden der Brennstoffzellen zu bilden. Hierfür kann die Sammelleitung auf demselben Isolationselement wie eines der Kontaktelemente unter Ausbildung eines elektrischen Kontakts zwischen der Sammelleitung und dem Kontaktelement aufgebracht sein.

Im Rahmen einer weiteren Ausführungsform sind die Kontaktelemente selbsttragend ausgeführt. Vorzugsweise sind auch die Sammelleitungen selbsttragend ausgeführt. So kann vorteilhafterweise mit einfachen Mittel erzielt werden, dass die Kontaktelemente beziehungsweise Sammelleitungen zum Trägersubstrat beabstandet angeordnet werden können, was mit den vorstehend erläuterten Vorteilen einhergeht.

Im Rahmen einer weiteren Ausführungsform sind die Kontaktelemente drahtförmig oder mit einer flachen Erstreckung, insbesondere als Blechelemente, ausgeführt.

Grundsätzlich können die Kontaktelemente sowohl einstückig als auch mehrstückig ausgeführt sein.

Im Rahmen einer weiteren Ausgestaltung ist mindestens eines der Kontaktelemente mehrstückig ausgeführt.

In der mehrstückigen Ausgestaltung kann beispielsweise mindestens ein erstes Bauteil des Kontaktelementes auf einer der Elektroden einer ersten Brennstoffzelle und einem der Isolationselemente, insbesondere beabstandet zum Trägersubstrat angeordnet, aufgebracht sein, wobei in elektrischem Kontakt stehend mit dem ersten Bauteil mindestens ein zweites Bauteil des Kontaktelementes auf demselben Isolationselement und einer der Elektroden einer zweiten, von der ersten unterschiedlichen Brennstoffzelle, insbesondere beabstandet zum Trägersubstrat angeordnet, aufgebracht ist, usw.. Auf der Basis eines Isolationselementes und mehrerer Kontaktelementbauteile können auf diese Weise auch mehrere Elektroden unterschiedlicher Brennstoffzellen miteinander elektrisch kontaktiert werden, insbesondere wobei das Isolationselement als Knoten- beziehungsweise Kreuzungspunkt für mehrere Kontaktbrücken dient.

Im Rahmen einer weiteren Ausgestaltung ist mindestens eines der Kontaktelemente einstückig ausgeführt.

Im Rahmen einer einstückigen Ausgestaltung kann das Kontaktelement mindestens einen Elektrodenkontaktabschnitt, mindestens einen Isolationselementkontaktabschnitt und mindestens einen Stegabschnitt aufweisen, wobei der Elektrodenkontaktabschnitt zur Kontaktierung einer der Elektroden beziehungsweise eines mit einer der Elektroden elektrisch leitend verbundenen Brennstoffzelleanschnitts und der der Isolationselementkontaktabschnitt zur Kontaktierung eines der Isolationselemente ausgebildet ist, wobei der Stegabschnitt zur Bildung einer Brücke zwischen dem Elektrodenkontaktabschnitt und dem Isolationselementkontaktabschnitt dient.

Der Elektrodenkontaktabschnitt kann dabei beispielsweise in Form einer polygonen, beispielsweise rechteckigen, Fläche oder einer Fläche mit einer gekrümmten Linienführung ausgeführt sein.

Im Rahmen einer speziellen Ausgestaltung ist mindestens einer der Elektrodenkontaktabschnitte ringförmig ausgeführt. Dabei kann der Elektrodenkontaktabschnitt einen, insbesondere in sich geschlossenen oder gegebenenfalls einfach unterbrochenen, Ringabschnitt mit nach innen und/oder außen weisende Kontaktlaschen aufweisen, die mindestens an einer der Elektroden beziehungsweise an mindestens einem mit einer der Elektroden elektrisch leitend verbundenen Brennstoffzellenabschnitt flächig zur Anlage bringbar sind.

Damit der Ringabschnitt den rohrförmigen Trägerkörper umschließen kann (äußere Kontaktierung, beispielsweise im oxidierenden Gasraum) beziehungsweise damit der Innenraum des rohrförmigen Trägerkörpers durch eine Aussparung in dem Trägersubstrat zugänglich bleibt, auch wenn der Ringabschnitt eine innenseitige Elektrode kontaktiert (innere Kontaktierung, beispielsweise reduzierender Gasraum), besitzen der Ringabschnitt eine augenartige, innenseitige Öffnung.

Die Kontaktlaschen können aus der Ebene des blechartigen metallischen Kontaktelementes derart herausgebogen werden, dass die Kontaktlaschen eine zylindrisch beziehungsweise entsprechend eines Teilabschnitts einer Mantelfläche eines Zylinders ausgebildete Elektrode beziehungsweise Brennstoffzellenabschnitt umfangsseitig flächig überdecken. Die Kontaktlaschen können derart gebogen werden, dass diese mit einer Federkraft auf die Elektrode beziehungsweise den Brennstoffzellenabschnitt drücken. Ferner ist eine stoffschlüssige Verbindung zwischen den Kontaktlaschen des Kontaktelementes und der Elektrode beziehungsweise dem Brennstoffzellenabschnitt möglich. Auch ein Verstemmen oder ein Verpressen kann zu einer sicheren elektrischen Kontaktierung der jeweiligen Kontaktelemente führen.

Der Stegabschnitt und der Isolationselementkontaktabschnitt können ohne Differenzierung ineinander übergehen.

Beispielsweise ist eine hammerförmige Ausgestaltung eines Kontaktelementes möglich, bei welcher der Hammerkopf als Elektrodenkontaktabschnitt und der Hammerstiel im mittleren Bereich als Stegabschnitt und im Endbereich als Isolationselementkontaktabschnitt dient. Derartig ausgestaltete Elemente können beispielsweise als Kontaktbrücke zwischen einer Brennstoffzelle und einer Sammelleitung oder als Bauteile eines mehrstückigen Kontaktelements mit mehreren von einem Konten- beziehungsweise Kreuzungspunkt ausgehenden, zu mehreren Brennstoffzellen führenden Kontaktbrücken eingesetzt werden.

Alternativ oder zusätzlich dazu kann das Brennstoffzellensystem ein hantelförmig ausgestaltetes Kontaktelement umfassen. Dabei können die beiden Handelenden jeweils als Elektrodenkontaktabschnitt, der mittlere Bereich des Handelgriffs als Isolationselementkontaktabschnitt und die beiden zwischen dem mittleren Bereich des Hantelgriffs und den Hantelenden liegenden Hantelgriffbereiche als Stegabschnitte dienen. Ein derartig ausgestaltetes Element kann insbesondere als Kontaktbrücke zwischen zwei Brennstoffzellen eingesetzt werden

Es ist jedoch ebenso möglich, dass die Stegabschnitte von den Isolationselementkontaktabschnitten differenzierbar sind.

Beispielsweise kann der Isolationselementkontaktabschnitt V-förmig, U-förmig, T-förmig, lambdaförmig, X-förmig oder in Form eines Knotenpunktes beziehungsweise einer Kreuzung mit mehr als vier Anbindungsstellen ausgestaltet sein. Dabei entspricht die Zahl der Elektrodenkontaktabschnitte und Stegabschnitte vorzugsweise der Zahl der Anbindungsstellen des Isolationselementkontaktabschnitts. Zum Beispiel kann ein derartig ausgebildetes Kontaktelement eine im Wesentlichen spinnenartige Form aufweisen, insbesondere bei der der Isolationselementkontaktabschnitt dem Spinnenkörper und die über die Stegabschnitte verbundenen Elektrodenkontaktabschnitte Spinnenbeine ähneln.

Grundsätzlich kann das Kontaktelement sowohl im reduzierenden, beispielsweise wasserstoffführenden, Gasraum als auch im oxidierenden, beispielsweise sauerstoffführenden, Gasraum eingesetzt werden. Das Isolationselement, auf welches das Kontaktelement aufgebracht ist, ist dabei vorzugsweise im gleichen Gasraum wie das Kontaktelement angeordnet. Im Fall eines im reduzierenden Gasraum angeordneten Kontaktelements ist vorzugsweise auch das Isolationselement, auf welches das Kontaktelement aufgebracht ist, im reduzierenden Gasraum angeordnet und/oder im Fall eines im oxidierenden Gasraums angeordneten Kontaktelementes ist vorzugsweise das Isolationselement, auf welches das Kontaktelement aufgebracht ist, im oxidierenden Gasraum angeordnet.

Im Rahmen einer weiteren Ausführungsform umfasst jedoch mindestens eines der Kontaktelemente Nickel: Insbesondere kann mindestens eines der Kontaktelemente aus Nickel ausgebildet sein. Nickel hat sich als Material für die Kontaktelemente als besonders vorteilhaft erwiesen, da es kostengünstiger als andere Materialien, beispielsweise Platin, ist und bei den Betriebstemperaturen von Brennstoffzellen und in reduzierender Atmosphäre eine gute elektrische Leitfähigkeit sowie gute mechanische Eigenschaften aufweist.

Nickel ist bei den Betriebstemperaturen von Brennstoffzellen jedoch empfindlich gegenüber oxidierenden Gasen, wie Luft und insbesondere Sauerstoff. Die Erfindung macht sich zu Nutzen, dass Nickel bei den Betriebstemperaturen von Brennstoffzellen hingegen unempfindlich gegenüber reduzierenden Gasen, beispielsweise Wasserstoff, ist.

Insofern ein Kontaktelement Nickel umfasst oder daraus ausgebildet ist, wird daher das Kontaktelement im Rahmen der vorliegenden Erfindung vorzugsweise im reduzierenden, beispielsweise wasserstoffführenden, Gasraum des Brennstoffzellensystems eingesetzt. Diese Ausgestaltung ist natürlich auch für nickelfreie Kontaktelemente möglich und insbesondere für Kontaktelemente aus Materialien vorteilhaft, welche unter den Betriebstemperaturen zur Oxidation im oxidierenden Gasraum neigen.

Im Rahmen einer weiteren Ausführungsform ist daher mindestens eines der Kontaktelemente, beispielsweise mindestens ein Teil der Kontaktelemente, im reduzierenden, beispielsweise wasserstoffführenden, Gasraum des Brennstoffzellensystems angeordnet. Die zu dem Kontaktelement zugehörigen Isolationselemente sind im Rahmen dieser Ausführungsform vorzugsweise ebenfalls im reduzierenden Gasraum des Brennstoffzellensystems angeordnet.

Im oxidierenden, beispielsweise luft- und/oder sauerstoffführenden, Gasraum des Brennstoffzellensystems kann dabei ein anderer Teil der Kontaktelemente, insbesondere welche aus einem oxidationsunempfindlicheren Material, beispielsweise Platin, ausgebildet sind, angeordnet sein.

Im Rahmen der vorliegenden Erfindung hat sich herausgestellt, dass es jedoch auch möglich ist, eine dem oxidierenden Gas ausgesetzte Kathode elektrisch mit einem Kontaktelement aus einem oxidationsempfindlichen Material, wie Nickel, zu kontaktieren.

Dies kann dadurch beispielsweise dadurch erfolgen, dass die Kathode eine gasdichte, elektrisch leitende Schicht aufweist, welche vom reduzierenden Gasraum aus zugänglich ist.

Im Rahmen einer weiteren Ausführungsform weist daher mindestens eine der Kathoden eine gasdichte, elektrisch leitende, vom reduzierenden Gasraum aus zugängliche Schicht auf, auf welche mindestens eines der Kontaktelemente, insbesondere eines der im reduzierenden Gasraum angeordneten Kontaktelemente, aufgebracht ist.

Im Rahmen einer weiteren Ausführungsform sind die Brennstoffzellen inert geträgerte Brennstoffzellen. Inert geträgerte Brennstoffzellen haben den Vorteil, das sowohl die Kathode/n als auch die Anode/n besonders einfach durch im reduzierenden Gasraum angeordnete Kontaktelemente elektrisch kontaktiert werden können, wobei die Kontaktelemente - wie bereits erläutert - besonders kostengünstig ausgeführt werden können. Die Kontaktierung der Kathode/n und Anode/n kann beispielsweise dadurch besonders einfach erzielt werden, dass in einer Elektroden-Elektrolyt-Einheit die Kathode, der Elektrolyt und die Anode in Form einer Schichtanordnung mit zueinander versetzten Schichten ausgebildet werden. Auf diese Weise kann auch die unterste der Schichten über einen aufgrund des Schichtversatzes offen liegenden Bereich, insbesondere mit einem der Kontaktelemente, elektrisch kontaktiert werden.

Grundsätzlich können durch die Kontaktelemente sowohl innerhalb des rohrförmigen Trägerkörpers angeordnete Elektroden als auch außerhalb des rohrförmigen Trägerkörpers angeordnete Elektroden elektrisch kontaktiert werden.

Da der Raum innerhalb des rohrförmigen Trägerkörpers meist als reduzierender Gasraum eingesetzt wird, kontaktieren Kontaktelemente aus oxidationsempfindlichen Materialien, wie Nickel, vorzugsweise innerhalb des rohrförmigen Trägerkörpers angeordnete Elektroden elektrisch.

Im Rahmen einer weiteren Ausführungsform ist daher mindestens eines der Kontaktelemente (weiterhin) auf mindestens einem elektrisch leitenden, mit einer der Elektroden elektrisch verbunden, innerhalb des rohrförmigen Trägerkörpers angeordneten Brennstoffzellenabschnitt, insbesondere auf mindestens einer der innerhalb des rohrförmigen Trägerkörpers angeordneten Elektroden, aufgebracht.

Insofern der Raum außerhalb des rohrförmigen Trägerkörpers als reduzierender Gasraum dienen sollte, ist eine umgekehrte Kontaktierung bevorzugt, insbesondere wobei Kontaktelemente aus oxidationsempfindlichen Materialien, wie Nickel, vorzugsweise außerhalb des rohrförmigen Trägerkörpers angeordnete Elektroden elektrisch kontaktieren.

Vorzugsweise werden durch zumindest einen Teil der Kontaktelemente die Elektroden mehrerer unterschiedlicher Brennstoffzellen, insbesondere zu Brennstoffzellensträngen, in Reihe geschaltet. So kann vorteilhafterweise die Gesamtspannung des Brennstoffzellensystems erhöht werden.

Alternativ oder zusätzlich können durch zumindest einen, gegebenenfalls anderen, Teil der Kontaktelemente die Elektroden mehrerer unterschiedlicher Brennstoffzellen, beispielsweise zu verzweigten Brennstoffzellensträngen, parallel geschaltet werden. Dies wirkt sich vorteilhaft auf die Zuverlässigkeit des Brennstoffzellensystems im Fall eines Ausfalls einzelner Brennstoffzellen aus.

Zusätzlich können durch zumindest einen weiteren Teil der Kontaktelemente unverzweigte oder verzweigte Brennstoffzellenstränge elektrisch mit Sammelleitungen verbunden werden. Beispielsweise können mehrere unverzweigte oder verzweigte Brennstoffzellenstränge zwischen zwei Sammelleitungen parallel geschaltet werden.

Hinsichtlich weiterer Merkmale und Vorteile des erfindungsgemäßen Brennstoffzellensystems wird hiermit explizit auf die Erläuterungen im Zusammenhang mit dem erfindungsgemäßen Kontaktelement, dem erfindungsgemäßen Verfahren, der Figurenbeschreibung sowie die Figuren verwiesen.

Ein weiterer Gegenstand der vorliegenden Erfindung ist ein metallisches Kontaktelement, welches mindestens eine Elektrode eines Brennstoffzellensystems nach Anspruch 1 kontaktiert, wobei das metallische Kontaktelement als, insbesondere einstückiges, beispielsweise selbsttragendes, Blechelement ausgeführt ist und mindestens einen Elektrodenkontaktabschnitt und mindestens einen Stegabschnitt aufweist.

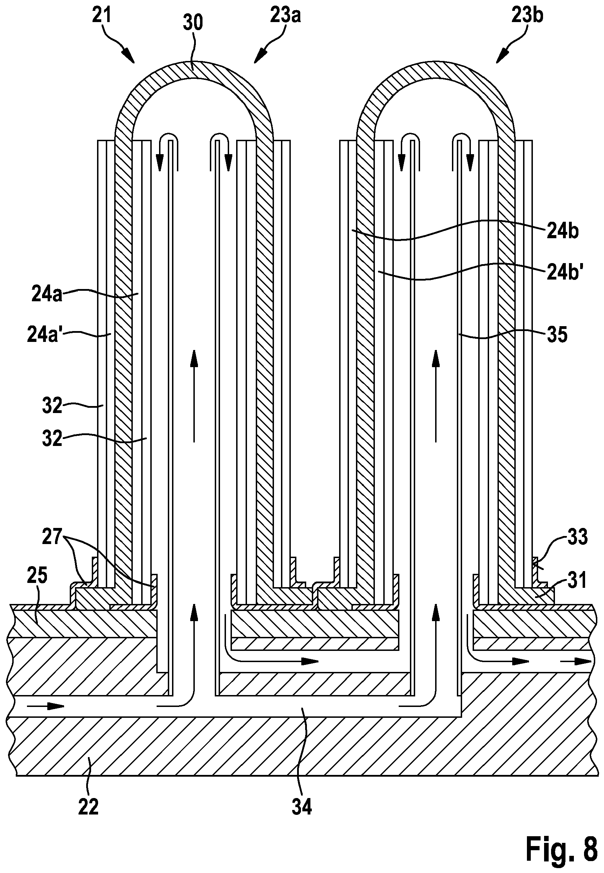

Das erfindungsgemäße Kontaktelement hat den Vorteil, dass hierdurch sowohl Elektrolyt und/oder Elektroden (Kathoden/Anoden) geträgerte als auch inert geträgerte tubulare Brennstoffzellen auf einfache Weise elektrisch kontaktiert werden können. Dabei kann ein erfindungsgemäßes Kontaktelementen sowohl wie im Zusammenhang mit erfindungsgemäßen Brennstoffzellensystem erläutert als auch wie an dem in Figur 8 gezeigten Brennstoffzellensystem erläutert verwendet werden.

Der Elektrodenkontaktabschnitt ist vorzugsweise zur Kontaktierung einer der Elektroden einer Brennstoffzelle beziehungsweise eines mit einer der Elektroden elektrisch leitend verbundenen Brennstoffzellenabschnitts ausgebildet.

Der Stegabschnitt kann insbesondere zur Bildung einer elektrischen Kontaktbrücke zwischen einer Brennstoffzelle und mindestens einer weiteren Brennstoffzelle und/oder einer elektrischen Sammelleitung eines Brennstoffzellensystems dienen. Dabei kann der Stegabschnitt zur Ausbildung einer brückenförmigen, also beabstandeten, elektrischen Kontaktbrücke oder zur Ausbildung einer auf einem elektrisch isolierenden Abschnitt eines Brennstoffzellensystems aufliegenden elektrischen Kontaktbrücke ausgebildet sein.

Insbesondere kann das Kontaktelement mindestens einen Elektrodenkontaktabschnitt, insbesondere mindestens zwei Elektrodenkontaktabschnitte, beispielsweise mindestens drei Elektrodenkontaktabschnitte, mindestens einen Stegabschnitt, insbesondere mindestens zwei Stegabschnitte, beispielsweise mindestens drei Stegabschnitte, und mindestens einen Verzweigungs- und/oder Isolationselementkontaktabschnitt aufweisen.

Dabei kann der Verzweigungs- und/oder Isolationselementkontaktabschnitt zur Anbindung von zwei oder mehr, insbesondere drei oder mehr, Stegabschnitten und/oder zur Kontaktierung eines auf einem Trägersubstrat eines Brennstoffzellensystems aufgebrachten Isolationselements ausgebildet sein. Der oder die Stegabschnitte können dabei insbesondere zur Bildung einer elektrischen Kontaktbrücken jeweils zwischen einem der Elektrodenkontaktabschnitte und dem Verzweigungs- und/oder Isolationselementkontaktabschnitt dienen. Ein Verzweigungs- und/oder Isolationselementkontaktabschnitt zur Anbindung von zwei oder mehr Stegabschnitten hat den Vorteil, dass hierdurch zwei Brennstoffzellen in Reihe geschaltet werden können, was sich vorteilhaft auf die Gesamtspannung des Brennstoffzellensystems auswirkt. Ein Verzweigungs- und/oder Isolationselementkontaktabschnitt zur Anbindung von drei oder mehr Stegabschnitten hat den Vorteil, dass hierdurch drei Brennstoffzellen beziehungsweise Brennstoffzellenstränge parallel geschaltet werden können, was sich vorteilhaft auf die Zuverlässigkeit des Brennstoffzellensystems im Fall eines Ausfalls einzelner Brennstoffzellen auswirkt.

Vorzugsweise entspricht die Zahl der Elektrodenkontaktabschnitte und Stegabschnitte der Zahl der Anbindungsstellen des Verzweigungs- und/oder Isolationselementkontaktabschnitts.

Die Stegabschnitte und der Verzweigungs- und/oder Isolationselementkontaktabschnitt können ohne Differenzierung ineinander übergehen. Dies kann insbesondere bei einer Ausgestaltung mit zwei, durch einen lineare, stegartigen Verzweigungs- und/oder Isolationselementkontaktabschnitt verbundene Stegabschnitte der Fall sein.

Es ist jedoch ebenso möglich, dass die Stegabschnitte von dem Verzweigungs- und/oder Isolationselementkontaktabschnitt differenzierbar sind. Dies ist insbesondere der Fall, wenn der Verzweigungs- und/oder Isolationselementkontaktabschnitt V-förmig, U-förmig, T-förmig, lamdaförmig, X-förmig oder in Form eines Knotenpunktes beziehungsweise einer Kreuzung mit mehr als vier Anbindungsstellen ausgestaltet ist. Zum Beispiel kann ein derartig ausgebildetes Kontaktelement eine im Wesentlichen spinnenartige Form aufweisen, insbesondere bei der Verzweigungs- und/oder Isolationselementkontaktabschnitt dem Spinnenkörper und die über die Stegabschnitte verbundenen Elektrodenkontaktabschnitte Spinnenbeine ähneln.

Die Elektrodenkontaktabschnitte können beispielsweise in Form einer polygonen, beispielsweise rechteckigen, Fläche oder einer Fläche mit einer gekrümmten Linienführung ausgeführt sein.

Beispielsweise ist eine hammerförmige Ausgestaltung des Kontaktelementes möglich, bei welcher der Hammerkopf als Elektrodenkontaktabschnitt und der Hammerstiel im mittleren Bereich als Stegabschnitt und im Endbereich als Verzweigungs- und/oder Isolationselementkontaktabschnitt dient. Derartig ausgestaltete Elemente können beispielsweise als Kontaktbrücke zwischen einer Brennstoffzelle und einer Sammelleitung oder als Bauteile eines mehrstückigen Kontaktelements mit mehreren von einem Konten- beziehungsweise Kreuzungspunkt ausgehenden, zu mehreren Brennstoffzellen führenden Kontaktbrücken eingesetzt werden.

Alternativ oder zusätzlich dazu kann Kontaktelement hantelförmig ausgestaltet sein. Dabei können die beiden Handelenden jeweils als Elektrodenkontaktabschnitt, der mittlere Bereich des Handelgriffs als Verzweigungs- und/oder Isolationselementkontaktabschnitt und die beiden zwischen dem mittleren Bereich des Hantelgriffs und den Hantelenden liegenden Hantelgriffbereiche als Stegabschnitte dienen. Ein derartig ausgestaltetes Element kann insbesondere als Kontaktbrücke zwischen zwei Brennstoffzellen eingesetzt werden

Im Rahmen einer speziellen Ausgestaltung ist mindestens einer der Elektrodenkontaktabschnitte ringförmig ausgeführt. Vorzugsweise weist der Elektrodenkontaktabschnitt dabei einen, insbesondere in sich geschlossenen oder gegebenenfalls einfach unterbrochenen, Ringabschnitt mit nach innen und/oder außen weisende Kontaktlaschen auf. Die Kontaktlaschen sind dabei vorzugsweise an mindestens einer der Elektroden beziehungsweise an mindestens einem mit einer der Elektroden elektrisch leitend verbundenen Brennstoffzellenabschnitt zur Anlage bringbar sind.

Damit der Ringabschnitt den rohrförmigen Trägerkörper umschließen kann (äußere Kontaktierung, beispielsweise im oxidierenden Gasraum) beziehungsweise damit der Innenraum des rohrförmigen Trägerkörpers durch eine Aussparung in dem Trägersubstrat zugänglich bleibt, auch wenn der Ringabschnitt eine innenseitige Elektrode kontaktiert (innere Kontaktierung, beispielsweise reduzierender Gasraum), besitzen der Ringabschnitt eine augenartige, innenseitige Öffnung.

Die Kontaktlaschen können aus der Ebene des blechartigen metallischen Kontaktelementes derart herausgebogen werden, dass die Kontaktlaschen eine zylindrisch beziehungsweise entsprechend eines Teilabschnitts einer Mantelfläche eines Zylinders ausgebildete Elektrode beziehungsweise Brennstoffzellenabschnitt umfangsseitig flächig überdecken. Die Kontaktlaschen können derart gebogen werden, dass diese mit einer Federkraft auf die Elektrode beziehungsweise den Brennstoffzellenabschnitt drücken. Ferner ist eine stoffschlüssige Verbindung zwischen den Kontaktlaschen des Kontaktelementes und der Elektrode beziehungsweise dem Brennstoffzellenabschnitt möglich. Auch ein Verstemmen oder ein Verpressen kann zu einer sicheren elektrischen Kontaktierung der jeweiligen Kontaktelemente führen.

Grundsätzlich kann das Kontaktelement sowohl im reduzierenden, beispielsweise wasserstoffführenden, Gasraum als auch im oxidierenden, beispielsweise sauerstoffführenden, Gasraum eingesetzt werden.

Im Rahmen einer weiteren Ausgestaltung umfasst das Kontaktelement Nickel: Insbesondere kann das Kontaktelement aus Nickel ausgebildet sein. Nickel hat sich als Material für das Kontaktelement als besonders vorteilhaft erwiesen, da es kostengünstiger als andere Materialien, beispielsweise Platin, ist und bei den Betriebstemperaturen von Brennstoffzellen und in reduzierender Atmosphäre eine gute elektrische Leitfähigkeit sowie gute mechanische Eigenschaften aufweist.

Insofern das Kontaktelement Nickel umfasst oder daraus ausgebildet ist, wird das Kontaktelement vorzugsweise im reduzierenden, beispielsweise wasserstoffführenden, Gasraum eines Brennstoffzellensystems eingesetzt. Diese Ausgestaltung ist natürlich auch für nickelfreie Kontaktelemente möglich und insbesondere für Kontaktelemente aus Materialien vorteilhaft, welche unter den Betriebstemperaturen zur Oxidation im oxidierenden Gasraum neigen.

Insofern das Kontaktelement im oxidierenden, beispielsweise luft- und/oder sauerstoffführenden, Gasraum des Brennstoffzellensystems eingesetzt werden soll, ist dieses vorzugsweise aus einem oxidafionsunempfindlicheren Material, beispielsweise Platin, ausgebildet.

Grundsätzlich können das Kontaktelement sowohl innerhalb eines rohrförmigen Brennstoffzellenträgerkörpers angeordnete Elektroden als auch außerhalb des rohrförmigen Brennstoffzellenträgerkörpers angeordnete Elektroden elektrisch kontaktiert werden. Da der Raum innerhalb von rohrförmigen Brennstoffzellen meist als reduzierender Gasraum eingesetzt wird, werden Kontaktelemente aus oxidationsempfindlichen Materialien, wie Nickel, vorzugsweise zur elektrischen Kontaktierung von innerhalb des rohrförmigen Trägerkörpers angeordneten Elektroden verwendet. Insofern der Raum außerhalb des rohrförmigen Trägerkörpers als reduzierender Gasraum dienen sollte, ist eine umgekehrte Verwendung bevorzugt, insbesondere wobei das Kontaktelement aus oxidationsempfindlichen Materialien, wie Nickel, vorzugsweise zur elektrischen Kontaktierung von außerhalb des rohrförmigen Trägerkörpers angeordneten Elektroden verwendet wird.

Hinsichtlich weiterer Merkmale und Vorteile des erfindungsgemäßen Kontaktelements wird hiermit explizit auf die Erläuterungen im Zusammenhang mit dem erfindungsgemäßen Brennstoffzellensystem, dem erfindungsgemäßen Verfahren, der Figurenbeschreibung sowie die Figuren verwiesen.

Ein weiterer Gegenstand der vorliegenden Erfindung ist ein Verfahren zur elektrischen Kontaktierung eines Brennstoffzellensystems nach Anspruch 1, umfassend die Verfahrensschritte:
a) Verbinden, insbesondere Verschweißen, mindestens eines metallischen Kontaktelementes, vorzugsweise eines erfindungsgemäßen Kontaktelementes, insbesondere des Kontaktelementes aus Verfahrensschritt b), mit mindestens einer Elektrode einer Brennstoffzelle, insbesondere mit einem rohrförmigen Trägerkörper, oder mit mindestens einem elektrisch leitenden, mit einer der Elektroden einer Brennstoffzelle, insbesondere mit einem rohrförmigen Trägerkörper, elektrisch verbunden Brennstoffzellenabschnitt,
b) Verbinden, insbesondere Verschweißen, mindestens eines metallischen Kontaktelementes, vorzugsweise eines erfindungsgemäßen Kontaktelementes, insbesondere des Kontaktelementes aus Verfahrensschritt a), mit mindestens einem auf einem Trägersubstrat aufgebrachten elektrisch isolierenden Isolationselement.

Das Verbinden kann in den Verfahrensschritt a) und/oder b) beispielsweise mittels Laserschweißen erfolgen.

Insbesondere können die Verfahrensschritte a) und b) derart ausgeführt werden, dass das beziehungsweise die Kontaktelemente beabstandet zu dem Trägersubstrat angeordnet sind.

Insbesondere kann die Brennstoffzelle mindestens eine Elektroden-Elektrolyt-Einheit aus zwei Elektroden und einem dazwischen angeordneten Elektrolyten umfassen. Dabei kann insbesondere eine der Elektroden die Kathode und die andere Elektrode die Anode bilden.

Verfahrensschritt a) kann dabei vor, nach oder zumindest teilweise zeitgleich mit Verfahrensschritt b) durchgeführt werden.

Weiterhin kann das Verfahren den Verfahrensschritt a1): Aufbringen von mindestens einer Brennstoffzelle, insbesondere mit einem rohrförmigen Trägerkörper, auf ein beziehungsweise das Trägersubstrat, umfassen. Verfahrensschritt a1) kann sowohl vor, nach als auch zumindest teilweise zeitgleich mit Verfahrensschritt a) erfolgen. Zum Beispiel ist es möglich Verfahrensschritt a) an einer der Elektroden von einer oder mehreren einzelnen, das heißt noch vom Trägersubstrat getrennten, Brennstoffzelle/n durchzuführen und diese Brennstoffzelle/n erst in einem nachfolgenden Verfahrensschritt a1) auf ein beziehungsweise das Trägersubstrat aufzubringen, wobei dann Verfahrensschritt b) an der auf dem Trägersubstrat aufgebrachten Brennstoffzelle durchgeführt wird. Es ist jedoch auch zum Beispiel möglich, erst Verfahrensschritt a1) durchzuführen und dann Verfahrensschritt a) an der oder den Elektroden der auf dem Trägersubstrat aufgebrachten Brennstoffzelle/n durchzuführen.

Weiterhin kann das Verfahren den Verfahrensschritt b1): Aufbringen von mindestens einem elektrisch isolierenden Isolationselement auf ein Trägersubstrat, umfassen. Verfahrensschritt b1) kann sowohl vor, nach als auch zumindest teilweise zeitgleich mit Verfahrensschritt a1) erfolgen. Das Aufbringen von Isolationselementen kann insbesondere durch einen oder mehrere Beschichtungsschritte, beispielsweise Druckschritte, und gegebenenfalls eine oder mehrere Temperaturbehandlungsschritte erfolgen. Beispielsweise kann in einem ersten Beschichtungsschritt eine keramische Isolationsschicht oder eine Vorstufenschicht für eine keramische Isolationsschicht auf ein beziehungsweise das Trägersubstrat, beispielsweise durch ein Druckverfahren, aufgebracht werden, wobei in einem zweiten Beschichtungsschritt eine metallische Kontaktschicht oder eine Vorstufenschicht für eine metallische Kontaktschicht, beispielsweise durch ein Druckverfahren, auf die keramische Isolationsschicht beziehungsweise Isolationsschichtvorstufe aufgebracht werden. Das herzustellende Isolationselement kann dann durch einen oder mehrere Sinterschritte, vorzugsweise einen gemeinsamen Sinterschritt, hergestellt werden.

Weiterhin kann das Verfahren den Verfahrensschritt c): Biegen mindestens eines metallischen Kontaktelementes, insbesondere erfindungsgemäßen Kontaktelementes, beispielsweise des Kontaktelementes aus Verfahrensschritt a) und/oder b), insbesondere um dieses an die Geometrie der zu Kontaktierenden Brennstoffzelle anzupassen, umfassen. Dabei kann Verfahrensschritt c) vor nach oder zumindest teilweise zeitgleich mit Verfahrensschritt a) und/oder b) durchgeführt werden. Zum Beispiel kann das Kontaktelement erst in Verfahrensschritt a) mit der Elektrode beziehungsweise dem Brennstoffzellenanschnitt verbunden werden, dann in Verfahrensschritt c) gebogen und dann in Verfahrensschritt b) mit dem Isolationselement verbunden werden. Oder Umgekehrt, das Kontaktelement kann erst in Verfahrensschritt b) mit dem Isolationselement verbunden, dann in Verfahrensschritt c) gebogen und dann in Verfahrenschritt a) mit der Elektrode beziehungsweise dem Brennstoffzellenabschnitt verbunden werden. Vorzugsweise wird Verfahrensschritt c) jedoch zumindest teilweise vor den Verfahrenschritten a) und b) durchgeführt. Mit anderen Worten, vorzugsweise werden in dem Verfahren Kontaktelemente eingesetzt, welche, insbesondere entsprechend der Geometrie des herzustellenden Brennstoffzellensystems, zumindest vorgebogen sind. Auf diese Weise können die Verfahrensschritt a) und b) vorteilhafterweise vereinfacht werden.

Weiterhin kann das Verfahren den Verfahrensschritt d): Verbinden, insbesondere Verschweißen, von zwei oder mehr Kontaktelementen auf und/oder mit einem der Isolationselemente, umfassen. Auf diese Weise kann aus mehreren Bauteilen ein mehrteiliges Kontaktelement zusammengesetzt werden, welches mehrere von einem Knoten- beziehungsweise Kreuzungspunkt ausgehende Kontaktbrücken, insbesondere zu mehreren unterschiedlichen Brennstoffzellen und/oder Sammelleitungen aufweist. Vorzugsweise wird dabei eine Kathode einer Brennstoffzelle mit einer Anode einer anderen Brennstoffzelle elektrisch verbunden. Mit anderen Worten, die Elektroden der Brennstoffzellen werden dabei vorzugsweise in Reihe geschaltet. Wie bereits vorstehend erläutert ist dabei zusätzlich eine Parallelschaltung von Brennstoffzellen möglich.

Hinsichtlich weiterer Merkmale und Vorteil des erfindungsgemäßen Verfahrens wird hiermit explizit auf die Erläuterungen im Zusammenhang mit dem erfindungsgemäßen Brennstoffzellensystem, dem erfindungsgemäßen Kontaktelement, der Figurenbeschreibung sowie die Figuren verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine perspektivische Ansicht eines gemäß einer erfindungsgemäßen Ausführungsform mit metallischen Kontaktelementen elektrisch kontaktierten Brennstoffzellensystems,
- Fig. 2: einen Querschnitt durch das in Fig. 1 gezeigte Brennstoffzellensystem 1 in der Ebene der metallischen Kontaktelemente;
- Fig. 3: eine Draufsicht auf eine erste Ausführungsform eines erfindungsgemäßen Kontaktelementes;
- Fig. 4a: eine Draufsicht auf eine zweite Ausführungsform eines erfindungsgemäßen Kontaktelementes;
- Fig. 4b: ist eine perspektivische Ansicht der in Fig. 4a gezeigten, zweiten Ausführungsform eines erfindungsgemäßen Kontaktelementes nach dem Biegen der Kontaktlaschen;
- Fig. 4c: eine Draufsicht auf eine Abwandlung der in Fig. 4a gezeigten zweiten Ausführungsform eines erfindungsgemäßen Kontaktelementes;
- Fig. 4d: ist eine perspektivische Ansicht der in Fig. 4c gezeigten, zweiten Ausführungsform eines erfindungsgemäßen Kontaktelementes nach dem Biegen der Kontaktlaschen und des Steg-, Verzweigungs- und/oder Isolationselementkontaktabschnitts;
- Fig. 4e: eine Draufsicht auf eine Abwandlung der in den Fig. 4a bis 4d gezeigten zweiten Ausführungsform eines erfindungsgemäßen Kontaktelementes;
- Fig. 5a: eine Draufsicht auf eine dritte Ausführungsform eines erfindungsgemäßen Kontaktelementes;
- Fig. 5b: ist eine perspektivische Ansicht der in Fig. 5a gezeigten, dritten Ausführungsform eines erfindungsgemäßen Kontaktelementes;
- Fig. 5c: ist eine perspektivische Ansicht der in Fig. 5a und 5b gezeigten, zweiten Ausführungsform eines erfindungsgemäßen Kontaktelementes nach dem Biegen der Kontaktlaschen und der Stegabschnitte;
- Fig. 6: eine Draufsicht auf eine vierte Ausführungsform eines erfindungsgemäßen Kontaktelementes;
- Fig. 7: eine Draufsicht auf eine fünft Ausführungsform eines erfindungsgemäßen Kontaktelementes; und
- Fig. 8: einen Querschnitt durch ein weiteres Brennstoffzellensystem zur Veranschaulichung einer weiteren Verwendung eines erfindungsgemäßen Kontaktelementes.

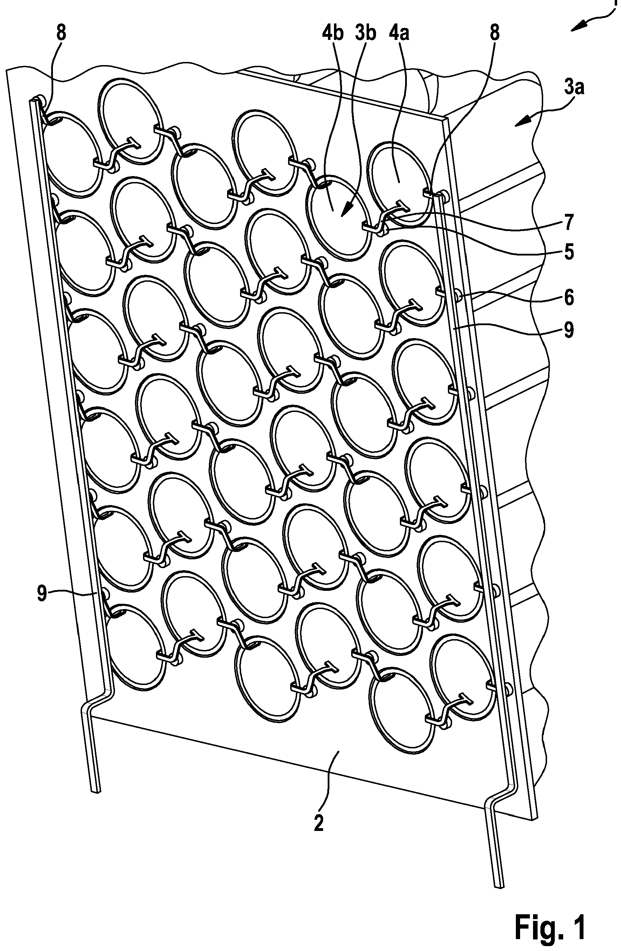

Figur 1 zeigt ein Ausführungsbeispiel eines erfindungsgemäßen Brennstoffzellensystems 1, wobei das Brennstoffzellensystem 1, insbesondere 36, Brennstoffzellen 3a, 3b mit einem rohrförmigen Trägerkörper umfasst, die derart auf ein gemeinsames, mit Aussparungen versehenes Trägersubstrat 2 aufgebracht sind, dass der Innenräume der rohrförmigen Trägerkörper durch die Aussparungsöffnungen zugänglich sind.

Die Brennstoffzellen 3a, 3b sind schematisch durch an einer Endseite geschlossene, rohrförmige Trägerkörper wiedergegeben, welche an der offenen Röhrenseite jeweils über einen Flanschabschnitt auf das Trägersubstrat 2 aufgebracht sind. Auf eine detailliertere Darstellung wurde verzichtet, da es sich bei den Brennstoffzellen 3a, 3b sowohl um Elektrolyt und/oder Elektroden geträgerte als auch um inert geträgerte Brennstoffzellen handeln kann, welch sich - wie bereits erläutert - im Wesentlichen durch die Anordnung der Elektroden und des Elektrolyten voneinander unterscheiden kann. Unabhängig von der Art der Trägerung haben diese Brennstoffzellen 3a, 3b mindestens eine, innerhalb des rohrförmigen Trägerkörpers angeordnete Elektrode 4a,4b gemeinsam, an welcher das erfindungsgemäße elektrische Kontaktierungskonzept exemplarisch erläutert wird.

Figur 1 zeigt, das auf dem Trägersubstrat 2 eine Vielzahl von elektrisch isolierenden Isolationselementen 5, 6 aufgebracht sind, wobei auf den Isolationselementen zum Trägersubstrat 2 beabstandet angeordnete, metallische Kontaktelemente 7, 8 aufgebracht sind, welche zur elektrischen Kontaktierung der Elektroden 4a, 4b dienen. Die Isolationselemente 5, 6 können einen Schichtaufbau (nicht dargestellt) aufweisen. Insbesondere können die Isolationselemente 5, 6 jeweils mindestens eine auf dem Trägersubstrat 2 aufgebrachte, beispielsweise keramische, elektrische isolierende Isolationsschicht und mindestens eine auf der Isolationsschicht aufgebrachte, beispielsweise metallische, Kontaktschicht aufweisen. Durch die Isolationsschicht kann dabei die elektrische Isolation bezüglich des Trägersubstrates gewährleistet werden. Durch die Kontaktschicht kann dabei das Verschweißen der Kontaktelemente mit den Isolationselementen ermöglicht werden.

Figur 1 illustriert, dass die Kontaktelemente 7, 8 weiterhin auf den Elektroden 4a, 4b beziehungsweise auf mit den Elektroden, elektrisch verbundenen Brennstoffzellenabschnitten aufgebracht sind. Bei den mit den Elektroden elektrisch verbundenen Brennstoffzellenabschnitten kann es sich beispielsweise um Elektrodenschutzschichten oder so genannte Interkonnektorschichten zur elektrischen Kontaktierung der Elektronen handeln.

Figur 1 veranschaulicht, dass sich dabei ein Teil der Kontaktelemente 7 jeweils zwischen zwei Brennstoffzellen 3a, 3b erstreckt, um eine elektrische Kontaktbrücke zwischen zwei Elektroden 4a,4b unterschiedlicher Brennstoffzellen 3a,3b zu bilden. Dabei bildet ein anderer Teil der Kontaktelemente 8 eine elektrische Kontaktbrücke zwischen einem Teil der Elektroden 4a und jeweils einer von zwei elektrischen Sammelleitungen 9, welche im vorliegenden Beispiel sechs Brennstoffzellensträngen aus jeweils sechs untereinander in Reihe geschalteten Brennstoffzellen 3a, 3b parallel schalten.

Die Isolationselemente auf welchen Kontaktelemente 7 aufgebracht sind, die elektrische Kontaktbrücken zwischen Brennstoffzellen 3a, 3b bilden, sind mit dem Bezugszeichen 5 gekennzeichnet, wobei diejenigen Isolationselemente, auf welchen Kontaktelemente 8 und eine der Sammelleitungen 9 aufgebracht sind, mit dem Bezugszeichen 6 gekennzeichnet sind. Diese beiden Arten von Isolationselementen 5, 6 können ähnlich oder gleich aufgebaut sein. Wie in Figur 1 gezeigt können die Isolationselemente 5, 6 im Wesentlichen in Form von Scheiben mit einer geringen Deck/Bodenfläche ausgestaltet sein. Dabei wird die Größe der Isolationselemente 5, 6 vorzugsweise derart gewählt, dass diese möglichst klein sind, insbesondere um Wärmleitung und Materialkosten zu minimieren, jedoch ausreichend groß sind um die Kontaktelemente 7, 8 beziehungsweise elektrischen Sammelleitungen 9 auf einfache Weise darauf aufzubringen.

Figur 1 zeigt, dass die Sammelleitungen 9 ebenfalls auf Isolationselementen 6 aufgebracht und beabstandet zum Trägersubstrat 2 angeordnet sind. Ein derartiger Aufbau geht mit den zuvor erläuterten Vorteilen, insbesondere anderer Temperaturzonen und einer einfach elektrischen Isolierung bezüglich des Trägersubstrats 2, einher.

Figur 1 zeigt Kontaktelemente 7, 8 die einstückig als selbsttragende Blechelemente ausgeführt sind und einen oder zwei Elektrodenkontaktabschnitt, einen Verzweigungs- und/oder Isolationselementkontaktabschnitt und ein oder zwei Stegabschnitt aufweisen, wobei die Elektrodenkontaktabschnitt zur Kontaktierung einer der Elektroden 4a, 4b beziehungsweise eines mit einer der Elektroden elektrisch leitend verbundenen Brennstoffzellenabschnitts und der Verzweigungs- und/oder Isolationselementkontaktabschnitt zur Kontaktierung eines der Isolationselemente 5, 6 ausgebildet ist, wobei die Stegabschnitte zur Bildung einer Brücke zwischen dem Elektrodenkontaktabschnitt und dem Verzweigungs- und/oder Isolationselementkontaktabschnitt dient.

Diejenigen Kontaktelemente 8, welche die elektrischen Sammelleitungen 9 kontaktieren, weisen ein im Wesentlichen hammerförmige Ausgestaltung auf, bei welcher der Hammerkopf als Elektrodenkontaktabschnitt und der Hammerstiel im mittleren Bereich als Stegabschnitt und im Endbereich als Verzweigungs- und/oder Isolationselementkontaktabschnitt dient. Diejenigen Kontaktelemente7 , welche eine elektrische Kontaktbrücke zwischen zwei Brennstoffzellen 3a, 3b bilden, weisen jeweils zwei Elektrodenkontaktabschnitte in Form einer polygonen, insbesondere rechteckigen, Fläche und einen V-förmigen Verzweigungs- und/oder Isolationselementkontaktabschnitt auf, welcher über zwei Stegabschnitte mit den Elektrodenkontaktabschnitte verbunden ist. Derartige Kontaktelemente können beispielsweise aus Metallblech, insbesondere Nickelblech, durch ein Scherschneiden, zum Beispiel Stanzen, oder durch ein Laserstrahlschneiden hergestellt werden, wobei die Elektrodenkontaktabschnitte und Stegabschnitte danach aus der Blechebene rausgebogen werden können, um in Figur 1 gezeigte dreidimensionale Kontaktelemente zu erhalten.

Figur 1 veranschaulicht weiterhin, dass die Kontaktelemente 7, 8, Isolationselemente 5, 6 und elektrischen Sammelleitungen 9 im reduzierenden, insbesondere wasserstoffführenden, Gasraum des Brennstoffzellensystems 1 angeordnet ist. Dies hat sich insbesondere für Materialien, welche unter den Betriebstemperaturen oxidationsempfindlich sind, wie Nickel, als vorteilhaft erwiesen.

Insofern es sich bei den Brennstoffzellen 3a, 3b um inert geträgerte Brennstoffzellen 3a, 3b handelt, können bei einem in Figur 1 gezeigten Aufbau nicht nur die Anoden sondern auch die Kathoden durch erfindungsgemäße Kontaktelemente 7, 8 elektrisch kontaktiert werden. Dies kann dadurch erzielt werden, dass die Kathode, der Elektrolyt und die Anode einer Elektroden-Elektrolyt-Einheit in Form einer Schichtanordnung mit zueinander versetzten Schichten ausgebildet werden. Auf diese Weise kann auch die unterste der Schichten über einen aufgrund des Schichtversatzes offen liegenden Bereich, insbesondere mit einem der Kontaktelemente, elektrisch kontaktiert werden. Insofern die Kontaktelemente 7, 8 aus einem oxidationsempfindlichen Material, wie Nickel ausgebildet sind, weisen die Kathoden dabei jedoch vorzugsweise eine gasdichte, elektrisch leitende, vom reduzierenden Gasraum aus zugängliche Schicht auf, auf welcher dann die im reduzierenden Gasraum angeordneten Kontaktelemente 7, 8 aufgebracht werden können.

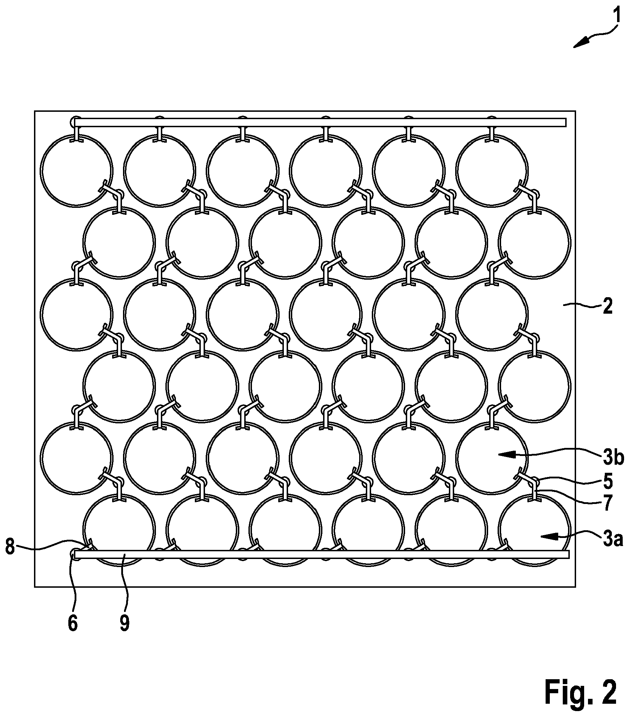

Figur 2 zeigt einen Querschnitt durch das in Fig. 1 gezeigte Brennstoffzellensystem 1 in der Ebene der metallischen Kontaktelemente 7, 8.

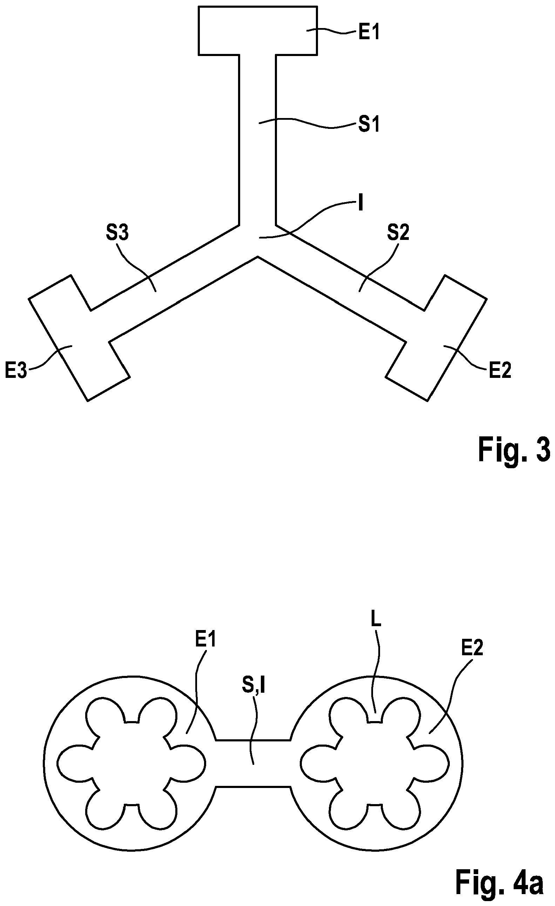

Figur 3 zeigt eine erste Ausführungsform eines erfindungsgemäßen metallischen, als Blechelement ausgeführten Kontaktelementes 7, in der das Kontaktelement 7 drei Elektrodenkontaktabschnitt E1, E2, E3, einen Verzweigungs- und/oder Isolationselementkontaktabschnitt I und drei Stegabschnitte S1, S2, S3 aufweist, wobei die Elektrodenkontaktabschnitte E1, E2, E3 zur Kontaktierung von Elektroden 4a, 4b und der Verzweigungs- und/oder Isolationselementkontaktabschnitt I zur Anbindung der drei Stegabschnitte S1, S2, S3 und gegebenenfalls zur Kontaktierung eines Isolationselementes 5, 6 ausgebildet ist, wobei die Stegabschnitte S1, S2, S3 zur Bildung von drei elektrischen Kontaktbrücken zwischen den Elektrodenkontaktabschnitten E1, E2, E3 und dem Verzweigungs- und/oder Isolationselementkontaktabschnitt I dient. Dabei ist der Verzweigungs- und/oder Isolationselementkontaktabschnitts I lambdaförmig ausgeführt, wobei die Zahl der Elektrodenkontaktabschnitte E1, E2, E3 und Stegabschnitte S1, S2, S3 der Zahl der Anbindungsstellen des Verzweigungs- und/oder Isolationselementkontaktabschnitts I entspricht. Ein derartiges Kontaktelement 7 kann beispielsweise in einem in den Figuren 1 und 2 gezeigten Brennstoffzellensystem eingesetzt werden um zwei Brennstoffzellen in Reihe zu schalten und gleichzeitig diesen Brennstoffzellenstrang mit einem benachbarten Brennstoffzellenstrang parallel zu schalten, was sich vorteilhaft auf die Zuverlässigkeit des Brennstoffzellensystems im Fall eines Ausfalls von einer oder mehreren der Brennstoffzellen auswirkt.

Figur 4a zeigt eine zweite Ausführungsform eines erfindungsgemäßen metallischen, als Blechelement ausgeführten Kontaktelementes, in der das Kontaktelement 7 zwei Elektrodenkontaktabschnitt E1, E2 und einen als Steg-, Verzweigungs- und/oder Isolationselementkontaktabschnitt dienenden Abschnitt S/I aufweist, welcher die Elektrodenabschnitte E1, E2 miteinander verbindet. Da dieser Abschnitt S/I im Rahmen dieser Ausführungsform nur zwei Anbindungsstellen aufweist, linear und die Stegabschnitte und der Verzweigungs- und/oder Isolationselementkontaktabschnitt gleichartig ausgeführt ist, sind die Stegabschnitte S1, S2 und Isolationselementkontaktabschnitt I im Rahmen dieser Ausführungsform nicht voneinander differenzierbar. Das in Figur 4a gezeigte Kontaktelement unterscheidet sich zudem im Wesentlichen dadurch von den in den Figuren 1 bis 3 gezeigten Kontaktelementen 7, dass die Elektrodenkontaktabschnitte E1, E2 ringförmig ausgeführt ist, wobei die Elektrodenkontaktabschnitt E1,E2 jeweils einen geschlossenen Ringsabschnitt mit nach innen weisende Kontaktlaschen L aufweisen, die aus der Blattebene beziehungsweise Blechebene heraus biegbar sind, um mit einer auf der Innenfläche oder der Außenfläche einer Brennstoffzelle mit rohrförmigem Trägerkörper flächig zur Anlage gebracht zu werden.

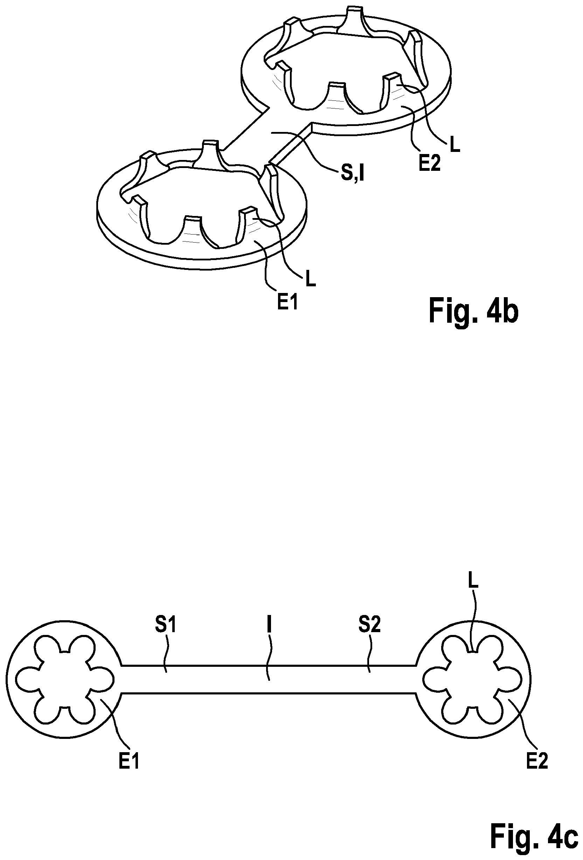

Figur 4b zeigt eine perspektivische Ansicht des in Fig. 4a gezeigten Kontaktelementes nachdem die Kontaktlaschen L aus der Blechebene herausgebogen wurden. Figur 4a veranschaulicht, dass die Elektrodenkontaktabschnitt E1, E2 dann eine kronenähnliche Form aufweisen, insbesondere wobei die Kontaktlaschen L den Zacken einer Krone ähneln.

Figur 4c zeigt eine Abwandlung der in Figur 4a gezeigten zweiten Ausführungsform eines erfindungsgemäßen Kontaktelementes mit einem verlängerten Stegabschnitt S1, S2 beziehungsweise Isolationselementkontaktabschnitt I und veranschaulicht, dass die Ausgestaltung der einzelnen Abschnitte des Kontaktelements auf den jeweiligen Aufbau des Brennstoffzellensystems angepasst werden kann.

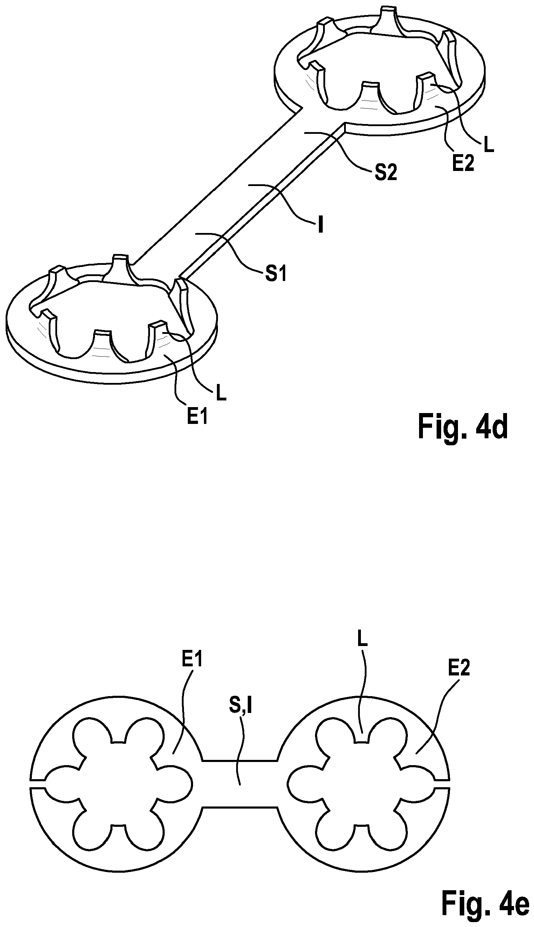

Figur 4d zeigt eine perspektivische Ansicht des in Fig. 4c gezeigten Kontaktelementes nachdem die Kontaktlaschen L aus der Blechebene herausgebogen wurden. Figur 4d veranschaulicht, dass die Elektrodenkontaktabschnitt E1, E2 auch hierbei eine kronenähnliche Form aufweisen, insbesondere wobei die Kontaktlaschen L den Zacken einer Krone ähneln.

Figur 4e zeigt eine weitere Abwandlung der in den Figuren 4a bis 4d gezeigten zweiten Ausführungsform eines erfindungsgemäßen Kontaktelementes, welches sich im Wesentlich dadurch von den in den Figuren 4a bis 4d gezeigten Ausgestaltungen unterscheidet, dass die Ringabschnitte einfach unterbrochen ausgebildet sind.

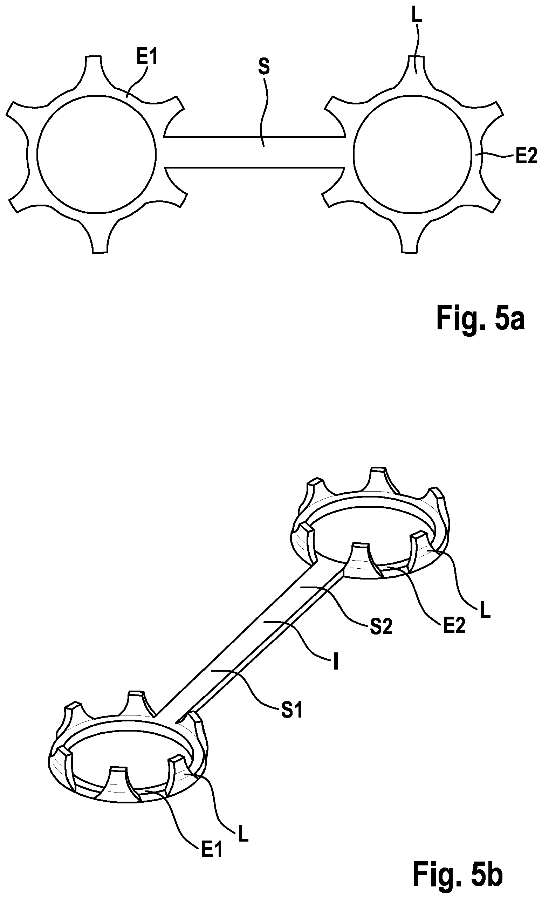

Figur 5a zeigt eine Draufsicht auf eine dritte Ausführungsform eines erfindungsgemäßen, welche sich im Wesentlichen dadurch von der in Figur 4a gezeigten zweiten Ausführungsform unterscheidet, dass die Elektrodenkontaktabschnitt E1,E2 nach außen weisende Kontaktlaschen L aufweisen, die aus der Blattebene beziehungsweise Blechebene heraus biegbar sind, um mit einer auf der Innenfläche oder der Außenfläche einer Brennstoffzelle mit rohrförmigem Trägerkörper flächig zur Anlage gebracht zu werden.

Figur 5b zeigt eine perspektivische Ansicht des in Fig. 5a gezeigten Kontaktelementes nachdem die Kontaktlaschen L aus der Blechebene herausgebogen wurden. Figur 5a veranschaulicht, dass die Elektrodenkontaktabschnitt E1, E2 auch dann eine kronenähnliche Form aufweisen, insbesondere wobei die Kontaktlaschen L den Zacken einer Krone ähneln.

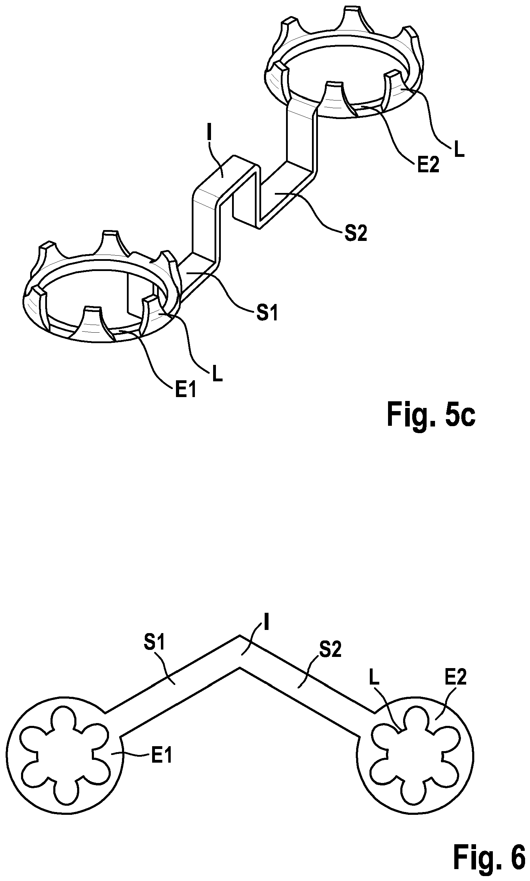

Figur 5c zeigt eine perspektivische Ansicht des in Fig. 5a und 5b gezeigten Kontaktelementes nachdem die Stegabschnitte S1 und S2 derart brücken- beziehungsweise bogenartig, insbesondere entgegen gesetzt zu den Kontaktlaschen L, aus der Blechebene herausgebogen wurden, dass der Verzweigungs- und/oder Isolationselementkontaktabschnitt I in der ursprünglichen Blechebene verblieb. Auch auf diese Art kann unter anderem eine beabstandete Anordnung des Kontaktelements 7 zum Trägersubstrat 2 erzielt werden.

Die in Figur 6 gezeigte vierte Ausführungsform eines erfindungsgemäßen Kontaktelementes unterscheidet sich im Wesentlichen dadurch von den in den Figuren 4a bis 5b gezeigten Ausführungsformen, dass das Kontaktelement einen V-förmigen Isolationselementkontaktabschnitt I aufweist.

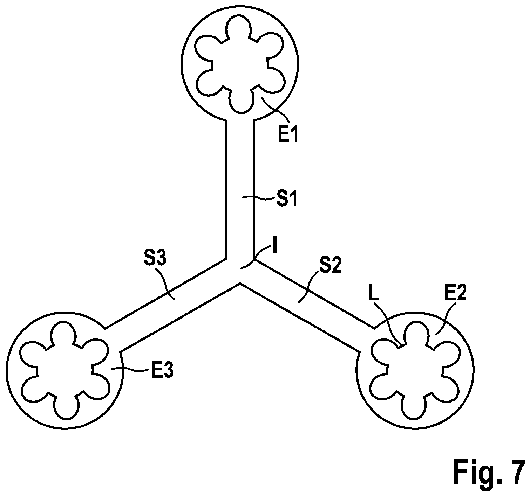

Die in Figur 7 gezeigte fünfte Ausführungsform eines erfindungsgemäßen Kontaktelementes unterscheidet sich im Wesentlichen dadurch von den in den Figuren 4a bis 6 gezeigten Ausführungsformen, dass das Kontaktelement einen lamdaförmigen Isolationselementkontaktabschnitt I sowie
drei über jeweils einen Stegabschnitt S1, S2, S3 mit dem Isolationselementkontaktabschnitt I verbundene Elektrodenkontaktabschnitt E1, E2, E3 aufweist.

Ein in den Figuren 3 bis 7 gezeigtes erfindungsgemäßes Kontaktelement kann sowohl zur elektrischen Kontaktierung eines gemäß Figur 1 und 2 aufgebauten Brennstoffzellensystems als auch für andersartig aufgebaute Brennstoffzellensysteme verwendet werden. Die Verwendung eines gemäß Fig. 4a ausgestalteten Kontaktelementes in einem andersartig aufgebauten Brennstoffzellensystem wird in Figur 8 veranschaulicht.

Figur 8 zeigt ein Elektrolyt und/oder Elektroden geträgertes Brennstoffzellensystem 21, welches mindestens zwei Brennstoffzellen 23a, 23b umfasst, die auf einem gemeinsamen Trägersubstrat 22 angeordnet sind. Die Brennstoffzellen 23a, 23b sind beispielhaft durch einen Elektrolytkörper 30 wiedergegeben. Der Elektrolytkörper 30 besteht hierbei aus einem Festkörper-Oxidmaterial SOFC, beispielsweise Zirkonoxid, welches einen rohrartigen Trägerkörper bildet und die geometrische Gestalt der Brennstoffzelle vorgibt.

In dem in Figur 8 gezeigten Beispiel sind die Brennstoffzellen als einseitig geschlossene Brennstoffzellen ausgeführt und weisen einen rohrförmigen, tubularen Abschnitt auf, der auf der offenen Seite der Brennstoffzelle in einem Flanschabschnitt 31 endet, der einteilig mit dem Elektrolytkörper 30 ausgeführt ist. Auf dem tubularen Abschnitt der Brennstoffzellen ist jeweils innenseitig und außenseitig eine Elektrode 24a, 24b' und 24a', 24b angeordnet, wobei die innenseitige Elektrode 24a, 24b' die Anode und die außenseitige Elektrode 24a', 24b die Kathode bildet. Die Anode 24a, 24b' wird mit dem Brenngas, vorzugsweise Wasserstoff, umspült, wobei die Kathode 24a', 24b mit Sauerstoff, vorzugsweise mit Luft, umspült wird.

Sowohl auf der innenseitigen Anode 24a, 24b' als auch auf der außenseitigen Kathode 24a', 24b befindet sich ein keramisches Kontaktelement 32 (Interkonnektor), welches in Form eines Gitters, eines Rasters, einer Matrix oder in Gestalt von Streifen auf der Oberfläche der Elektroden 24a, 24b' und 24a', 24b aufgebracht ist. Die so genannten Interkonnektoren, sind zum Stromabgriff auf den Elektroden 24a, 24b' und 24a', 24b aufgebracht.

Im Bereich des Flanschabschnittes 31 des Elektrolytkörpers 30 befinden sich erfindungsgemäße metallische Kontaktelemente 27, welche insbesondere wie in Figur 4a und 4b gezeigt ausgestaltet sind und derart angebracht sind, das diese die keramischen Kontaktelemente 32 der ersten und zweiten Brennstoffzelle 23a, 23b derart kontaktieren, dass das innere keramische Kontaktelement 30 der ersten Brennstoffzelle 23a (links dargestellt) über das metallische Kontaktelement 27 mit dem äußeren keramischen Kontaktelement 32 der zweiten Brennstoffzelle 23b (rechts dargestellt) elektrisch kontaktiert wird. Dabei ist der erste Ringabschnitt E1 des metallischen Kontaktelementes 27 außenseitig über den Elektrolytkörper 30 zur Kontaktierung einer Kathode 24a', 24b geführt bzw. angeordnet, wobei der zweiter Ringabschnitt E2 zur innenseitigen Kontaktierung einer Anode 24a, 24b' vorgesehen ist. Dabei sind die Kontaktlaschen L über eine flächige Anlage 33 mit dem fußseitigen Abschnitt der keramischen Kontaktelemente 32 elektrisch verbunden. Ein jeweils weiteres metallisches Kontaktelement 27 ist an der ersten Brennstoffzelle 23a mit dem außenseitigen keramischen Kontaktelement 32 und an der zweiten Brennstoffzelle 23b mit dem innenseitigen keramischen Kontaktelement 32 elektrisch verbunden dargestellt.

Die Darstellung zeigt ferner, dass das Trägersubstrat 22 zur Aufnahme der Brennstoffzellen 23a, 23b mit einem elektrisch isolierende Keramikeinsatz 25, der eine Aufnahmefläche zur Anordnung der Elektrolytkörper 30 über den jeweiligen Flanschabschnitt 31 ermöglicht. Zwischen dem Flanschabschnitt 31 und der Aufnahmefläche des Keramikeinsatzes 25 erstrecken sich die metallischen Kontaktelemente 27. Das Brenngas wird durch das Trägersubstrat 22 über einen Zufuhrkanal 34 in die Innenseite des Elektrolytkörpers 30 geleitet, wobei eine Lanze 35 vorgesehen ist, die mit dem Zufuhrkanal 34 in fluidischer Verbindung steht und das Brenngas bis zur Endseite des Elektrolytkörpers 30 in diesen einführt. Nach Austritt des Brenngases aus dem Ende der Lanze 35 kann die Anode 24a, 24b' auf der Innenseite des Elektrolytkörpers 30 vom Brenngas, beispielsweise Wasserstoff, umspült werden. Außenseitig findet auf nicht näher gezeigte Weise eine Umspülung der Kathode 24a', 24b mit Luft oder direkt mit Sauerstoff statt.

## Patentansprüche

1. Brennstoffzellensystem (1), umfassend
- ein Trägersubstrat (2),
- mindestens eine auf das Trägersubstrat (2) aufgebrachte Brennstoffzelle (3a,3b) mit einem rohrförmigen Trägerkörper und mindestens einer Elektroden-Elektrolyt-Einheit, welche zwei Elektroden (4a,4b) und einen dazwischen angeordneten Elektrolyten umfasst, wobei eine der Elektroden (4a,4b) die Kathode und die andere Elektrode (4a,4b) die Anode bildet,
- eine Vielzahl von auf dem Trägersubstrat (2) aufgebrachten, elektrisch isolierenden Isolationselementen (5,6) und
- mindestens ein auf mindestens eines der Isolationselemente (5,6) aufgebrachtes metallisches Kontaktelement (7,8) zur elektrischen Kontaktierung mindestens einer der Elektroden (4a,4b).

2. Brennstoffzellensystem (1) nach Anspruch 1, wobei mindestens eines der Kontaktelemente (7,8) weiterhin auf mindestens einem elektrisch leitenden, mit einer der Elektroden (4a,4b) elektrisch verbunden Brennstoffzellenabschnitt (32), insbesondere auf mindestens einer der Elektroden (4a,4b), aufgebracht ist.

3. Brennstoffzellensystem (1) nach Anspruch 1 oder 2, wobei sich mindestens eines der Kontaktelemente (7) zwischen mindestens zwei Brennstoffzellen (3a,3b) des Brennstoffzellensystems (1) erstreckt, um eine elektrische Kontaktbrücke zwischen zwei oder mehr Elektroden (4a,4b) unterschiedlicher Brennstoffzellen (3a,3b) zu bilden.

4. Brennstoffzellensystem (1) nach einem der Ansprüche 1 bis 3, wobei das Brennstoffzellensystem (1) weiterhin mindestens eine elektrische Sammelleitung (9), insbesondere zwei elektrische Sammelleitungen, zum Zusammenschalten von zwei oder mehr Brennstoffzellensträngen aus zwei oder mehr untereinander zusammengeschalteten, beispielsweise in Reihe und gegebenenfalls zusätzlich zumindest teilweise parallel geschalteten, Brennstoffzellen (3a,3b) umfasst, insbesondere wobei mindestens eine der Sammelleitungen (9) ebenfalls auf mindestens einem der Isolationselemente (6) aufgebracht und vorzugsweise zum Trägersubstrat (3) beabstandet angeordnet ist, insbesondere wobei sich mindestens eines der Kontaktelemente (8) zwischen der Sammelleitung (9) und mindestens einer der Brennstoffzellen (3a,3b) erstreckt, um eine elektrische Kontaktbrücke zwischen der Sammelleitung (9) und einer der Elektroden (4a,4b) der Brennstoffzellen (3a,3b) zu bilden.

5. Brennstoffzellensystem (1) nach einem der Ansprüche 1 bis 4, wobei die Kontaktelemente (7,8) selbsttragend ausgeführt sind.

6. Brennstoffzellensystem (1) nach einem der Ansprüche 1 bis 5, wobei die Kontaktelemente (7,8) drahtförmig oder mit einer flachen Erstreckung, insbesondere als Blechelemente, ausgeführt sind.

7. Brennstoffzellensystem (1) nach einem der Ansprüche 1 bis 6, wobei die Isolationselemente (5,6) mindestens eine auf das Trägersubstrat (2) aufgebrachte elektrisch isolierende, keramische Isolationsschicht, insbesondere einen Schichtaufbau aus mindestens einer auf das Trägersubstrat (2) aufgebrachten elektrisch isolierenden, keramischen Isolationsschicht und mindestens einer auf der Isolationsschicht aufgebrachten metallischen Kontaktschicht, aufweisen.

8. Brennstoffzellensystem (1) nach einem der Ansprüche 1 bis 7,
- wobei mindestens eines der Kontaktelemente (7,8) einstückig ausgeführt, insbesondere wobei das Kontaktelement (7,8) mindestens einen Elektrodenkontaktabschnitt (E1,E2,E3), mindestens einen Isolationselementkontaktabschnitt (I) und mindestens einen Stegabschnitt (S1,S2,S3) aufweisen, wobei der Elektrodenkontaktabschnitt (E1,E2,E3) zur Kontaktierung einer der Elektroden (4a,4b) beziehungsweise eines mit einer der Elektroden elektrisch leitend verbundenen Brennstoffzellenabschnitts und der der Isolationselementkontaktabschnitt (I) zur Kontaktierung eines der Isolationselemente (5,6) ausgebildet ist, wobei der Stegabschnitt (S1,S2,S3) zur Bildung einer Brücke zwischen dem Elektrodenkontaktabschnitt (E1,E2,E3) und dem Isolationselementkontaktabschnitt (I) dient, und/oder
- wobei mindestens eines der Kontaktelemente mehrstückig ausgeführt ist, insbesondere wobei mindestens ein erstes Bauteil des Kontaktelementes auf einer der Elektroden (4a,4b) einer ersten Brennstoffzelle (3a,3b) und einem der Isolationselemente (5), vorzugsweise beabstandet zum Trägersubstrat (3) angeordnet, aufgebracht ist, wobei in elektrischem Kontakt stehend mit dem ersten Bauteil mindestens ein zweites Bauteil des Kontaktelementes auf demselben Isolationselement (5) und einer der Elektroden (4a,4b) einer zweiten, von der ersten unterschiedlichen Brennstoffzelle (3a,3b), vorzugsweise beabstandet zum Trägersubstrat (3) angeordnet, aufgebracht ist.

9. Brennstoffzellensystem (1) nach einem der Ansprüche 1 bis 8, wobei mindestens eines der Kontaktelemente (7,8) Nickel umfasst, insbesondere aus Nickel ausgebildet ist.

10. Brennstoffzellensystem (1) nach einem der Ansprüche 1 bis 9, wobei mindestens eines der Kontaktelemente (7,8) im reduzierenden, insbesondere wasserstoffführenden, Gasraum des Brennstoffzellensystems (1) angeordnet ist.

11. Brennstoffzellensystem (1) nach einem der Ansprüche 1 bis 10, wobei mindestens eine der Kathoden eine gasdichte, elektrisch leitende, vom reduzierenden Gasraum aus zugängliche Schicht aufweist, auf welche mindestens eines der Kontaktelemente (7,8), insbesondere eines der im reduzierenden Gasraum angeordneten Kontaktelemente, aufgebracht ist.

12. Brennstoffzellensystem (1) nach einem der Ansprüche 1 bis 11, wobei die Brennstoffzellen (3a,3b) inert geträgerte Brennstoffzellen sind.

13. Brennstoffzellensystem (1) nach einem der Ansprüche 1 bis 12, wobei mindestens eines der Kontaktelemente (7,8) auf mindestens einem elektrisch leitenden, mit einer der Elektroden (4a,4b) elektrisch verbunden, innerhalb des rohrförmigen Trägerkörpers angeordneten Brennstoffzellenabschnitt, insbesondere auf mindestens einer der innerhalb des rohrförmigen Trägerkörpers angeordneten Elektroden (4a,4b), aufgebracht ist.

14. Metallisches Kontaktelement (7,8) welches mindestens eine Elektrode (4a,4b,24a,24a'24b,24b') eines Brennstoffzellensystems (1) nach Anspruch 1 kontaktiert, wobei das metallische Kontaktelement (7,8) als Blechelement ausgeführt ist, aufweisend
- mindestens einen Elektrodenkontaktabschnitt (E1 ,E2,E3) und
- mindestens einen Stegabschnitt (S1,S2,S3).

15. Verfahren zur elektrischen Kontaktierung eines Brennstoffzellensystems (1) nach Anspruch 1, umfassend die Verfahrensschritte:
a) Verbinden, insbesondere Verschweißen, mindestens eines metallischen Kontaktelementes (7,8) nach Anspruch 14, mit mindestens einer Elektrode (4a,4b) einer Brennstoffzelle (3a,3b), mit einem rohrförmigen Trägerkörper oder mit mindestens einem elektrisch leitenden, mit einer der Elektroden (4a,4b) einer Brennstoffzelle (3a,3b) mit einem rohrförmigen Trägerkörper elektrisch verbunden Brennstoffzellenabschnitt (32),
b) Verbinden, insbesondere Verschweißen, des metallischen Kontaktelementes mit mindestens einem auf einem Trägersubstrat (2) aufgebrachten elektrisch isolierenden Isolationselement (5,6),
vorzugsweise derart, dass mindestens eines der Kontaktelemente (7,8) beabstandet zu dem Trägersubstrat (2) angeordnet ist.

## Claims

1. Fuel cell system (1), comprising
- a carrier substrate (2),
- at least one fuel cell (3a, 3b) which is mounted on the carrier substrate (2) and has a tubular carrier body and at least one electrode-electrolyte unit which comprises two electrodes (4a, 4b) and an electrolyte arranged therebetween, wherein one of the electrodes (4a, 4b) forms the cathode and the other electrode (4a, 4b) forms the anode,
- a plurality of electrically insulating insulation elements (5, 6) mounted on the carrier substrate (2), and
- at least one metallic contact element (7, 8) mounted on at least one of the insulation elements (5, 6) and intended for electrically contacting at least one of the electrodes (4a, 4b).

2. Fuel cell system (1) according to Claim 1, wherein at least one of the contact elements (7, 8) is further mounted on at least one electrically conducting fuel cell portion (32) electrically connected to one of the electrodes (4a, 4b), in particular on at least one of the electrodes (4a, 4b).

3. Fuel cell system (1) according to Claim 1 or 2, wherein at least one of the contact elements (7) extends between at least two fuel cells (3a, 3b) of the fuel cell system (1) in order to form an electrical contact bridge between two or more electrodes (4a, 4b) of different fuel cells (3a, 3b).

4. Fuel cell system (1) according to one of Claims 1 to 3, wherein the fuel cell system (1) further comprises at least one electrical collecting line (9), in particular two electrical collecting lines, for interconnecting two or more fuel cell strands composed of two or more fuel cells (3a, 3b) which are interconnected, for example connected in series and, where appropriate, additionally at least partially in parallel, in particular wherein at least one of the collecting lines (9) is also mounted on at least one of the insulation elements (6) and preferably arranged at a distance from the carrier substrate (3), in particular wherein at least one of the contact elements (8) extends between the collecting line (9) and at least one of the fuel cells (3a, 3b) in order to form an electrical contact bridge between the collecting line (9) and one of the electrodes (4a, 4b) of the fuel cells (3a, 3b).

5. Fuel cell system (1) according to one of Claims 1 to 4, wherein the contact elements (7, 8) are designed to be self-supporting.

6. Fuel cell system (1) according to one of Claims 1 to 5, wherein the contact elements (7, 8) are designed in wire form or with a flat extent, in particular as sheet metal elements.

7. Fuel cell system (1) according to one of Claims 1 to 6, wherein the insulation elements (5, 6) have at least one electrically insulating, ceramic insulation layer mounted on the carrier substrate (2), in particular a layer structure composed of at least one electrically insulating, ceramic insulation layer mounted on the carrier substrate (2), and at least one metallic contact layer mounted on the insulation layer.

8. Fuel cell system (1) according to one of Claims 1 to 7,
- wherein at least one of the contact elements (7, 8) is designed in one piece, in particular wherein the contact element (7, 8) has at least one electrode contact portion (E1, E2, E3), at least one insulation element contact portion (I) and at least one web portion (S1, S2, S3), wherein the electrode contact portion (E1, E2, E3) is designed for contacting one of the electrodes (4a, 4b) or a fuel cell portion connected to one of the electrodes in an electrically conducting manner, and the insulation element contact portion (I) is designed for contacting one of the insulation elements (5, 6), wherein the web portion (S1, S2, S3) serves for forming a bridge between the electrode contact portion (E1, E2, E3) and the insulation element contact portion (I), and/or
- wherein at least one of the contact elements is of multi-piece design, in particular wherein at least a first component of the contact element is mounted on one of the electrodes (4a, 4b) of a first fuel cell (3a, 3b) and one of the insulation elements (5), preferably being arranged at a distance from the carrier substrate (3), wherein at least a second component of the contact element, in electrical contact with the first component, is mounted on the same insulation element (5) and one of the electrodes (4a, 4b) of a second fuel cell (3a, 3b) different from the first, preferably being arranged at a distance from the carrier substrate (3).

9. Fuel cell system (1) according to one of Claims 1 to 8, wherein at least one of the contact elements (7, 8) comprises nickel, in particular is formed from nickel.

10. Fuel cell system (1) according to one of Claims 1 to 9, wherein at least one of the contact elements (7, 8) is arranged in the reducing, in particular hydrogen-channelling, gas space of the fuel cell system (1).

11. Fuel cell system (1) according to one of Claims 1 to 10, wherein at least one of the cathodes has a gastight, electrically conducting layer which is accessible from the reducing gas space and on which at least one of the contact elements (7, 8), in particular one of the contact elements arranged in the reducing gas space, is mounted.

12. Fuel cell system (1) according to one of Claims 1 to 11, wherein the fuel cells (3a, 3b) are fuel cells on an inert carrier.

13. Fuel cell system (1) according to one of Claims 1 to 12, wherein at least one of the contact elements (7, 8) is mounted on at least one electrically conducting fuel cell portion which is electrically connected to one of the electrodes (4a, 4b) and arranged within the tubular carrier body, in particular on at least one of the electrodes (4a, 4b) arranged within the tubular carrier body.

14. Metallic contact element (7, 8) which contacts at least one electrode (4a, 4b, 24a, 24a', 24b, 24b') of a fuel cell system (1) according to Claim 1, wherein the metallic contact element (7, 8) is designed as a sheet metal element, having
- at least one electrode contact portion (E1, E2, E3) and
- at least one web portion (S1, S2, S3).

15. Method for electrically contacting a fuel cell system (1) according to Claim 1, comprising the following method steps:
a) connecting, in particular welding, at least one metallic contact element (7, 8) according to Claim 14 to at least one electrode (4a, 4b) of a fuel cell (3a, 3b), to a tubular carrier body or to at least one electrically conducting fuel cell portion (32) which is electrically connected to one of the electrodes (4a, 4b) of a fuel cell (3a, 3b) having a tubular carrier body,
b) connecting, in particular welding, the metallic contact element to at least one electrically insulating insulation element (5, 6) mounted on a carrier substrate (2),
preferably in such a way that at least one of the contact elements (7, 8) is arranged at a distance from the carrier substrate (2).

## Revendications

1. Système de pile à combustible (1), comprenant
- un substrat porteur (2),
- au moins une pile à combustible (3a, 3b) appliquée sur le substrat porteur (2), pourvue d'un corps porteur de forme tubulaire et d'au moins un ensemble électrodes-électrolyte qui comprend deux électrodes (4a, 4b) et un électrolyte disposé entre celles-ci, l'une des électrodes (4a, 4b) formant la cathode et l'autre électrode (4a, 4b) l'anode,
- une pluralité d'éléments d'isolation (5, 6) électriquement isolants appliqués sur le substrat porteur (2) et
- au moins un élément de contact (7, 8) métallique appliqué sur au moins l'un des éléments d'isolation (5, 6) pour réaliser le contact électrique avec au moins l'une des électrodes (4a, 4b).

2. Système de pile à combustible (1) selon la revendication 1, au moins l'un des éléments de contact (7, 8) étant en outre appliqué sur au moins une portion électriquement'conductrice de pile à combustible (32) reliée électriquement avec l'une des électrodes (4a, 4b), notamment sur au moins l'une des électrodes (4a, 4b).

3. Système de pile à combustible (1) selon la revendication 1 ou 2, au moins l'un des éléments de contact (7) s'étendant entre au moins deux piles à combustible (3a, 3b) du système de pile à combustible (1) afin de former un cavalier de contact électrique entre deux électrodes (4a, 4b) ou plus de différentes piles à combustible (3a, 3b).

4. Système de pile à combustible (1) selon l'une des revendications 1 à 3, le système de pile à combustible (1) comprenant en outre au moins une ligne collectrice (9) électrique, notamment deux lignes collectrices électriques, destinées à l'interconnexion de deux branches de piles à combustible ou plus parmi deux piles à combustible (3a, 3b) ou plus interconnectées entre elles, par exemple branchées en série et éventuellement en plus au moins partiellement en parallèle, au moins l'une des lignes collectrices (9) étant notamment aussi appliquée sur au moins l'un des éléments d'isolation (6) et de préférence disposée avec un écart par rapport au substrat porteur (3), au moins l'un des éléments de contact (8) s'étendant notamment entre la ligne collectrice (9) et au moins l'une des piles à combustible (3a, 3b) afin de former un cavalier de contact électrique entre la ligne collectrice (9) et l'une des électrodes (4a, 4b) des piles à combustible (3a, 3b).

5. Système de pile à combustible (1) selon l'une des revendications 1 à 4, les éléments de contact (7, 8) étant réalisés autoportants.

6. Système de pile à combustible (1) selon l'une des revendications 1 à 5, les éléments de contact (7, 8) étant réalisés en forme de fil métallique ou avec une extension plate, notamment sous la forme d'éléments en tôle.

7. Système de pile à combustible (1) selon l'une des revendications 1 à 6, les éléments d'isolation (5, 6) possédant au moins une couche isolante en céramique électriquement isolante appliquée sur le substrat porteur (2), notamment une structure de couches composée d'au moins une couche isolante en céramique électriquement isolante appliquée sur le substrat porteur (2) et d'au moins une couche de contact métallique appliquée sur la couche isolante.

8. Système de pile à combustible (1) selon l'une des revendications 1 à 7,
- au moins l'un des éléments de contact (7, 8) étant réalisé d'un seul tenant, l'élément de contact (7, 8) possédant notamment au moins une portion de contact d'électrode (E1, E2, E3), au moins une portion de contact d'élément isolant (I) et au moins une portion d'élément jointif (S1, S2, S3), la portion de contact d'électrode (E1, E2, E3) étant configurée pour établir le contact avec l'une des électrodes (4a, 4b) ou avec une portion de pile à combustible reliée de manière électriquement conductrice avec l'une des électrodes et la portion de contact d'élément isolant (I) pour établir le contact avec l'un des éléments isolants (5, 6), la portion d'élément jointif (S1, S2, S3) servant à former un pont entre la portion de contact d'électrode (E1, E2, E3) et la portion de contact d'élément isolant (I), et/ou
- au moins l'un des éléments de contact étant réalisé en plusieurs parties, au moins un premier élément structural de l'élément de contact étant notamment appliqué sur l'une des électrodes (4a, 4b) d'une première pile à combustible (3a, 3b) et l'un des éléments isolants (5), de préférence disposé avec un écart par rapport au substrat porteur (3), au moins un deuxième élément structural de l'élément de contact, qui se trouve en contact électrique avec le premier élément structural, étant appliqué sur le même élément isolant (5) et l'une des électrodes (4a, 4b) d'une deuxième pile à combustible (3a, 3b) différente de la première, de préférence disposé avec un écart par rapport au substrat porteur (3).

9. Système de pile à combustible (1) selon l'une des revendications 1 à 8, au moins l'un des éléments de contact (7, 8) comprenant du nickel, étant notamment constitué de nickel.

10. Système de pile à combustible (1) selon l'une des revendications 1 à 9, au moins l'un des éléments de contact (7, 8) étant disposé dans un espace de gaz réducteur, notamment conduisant de l'hydrogène, du système de pile à combustible (1).

11. Système de pile à combustible (1) selon l'une des revendications 1 à 10, au moins l'une des cathodes possédant une couche hermétique au gaz, électriquement conductrice et accessible depuis l'espace de gaz réducteur, sur laquelle est appliqué au moins l'un des éléments de contact (7, 8), notamment l'un des éléments de contact disposés dans l'espace de gaz réducteur.

12. Système de pile à combustible (1) selon l'une des revendications 1 à 11, les piles à combustible (3a, 3b) étant des piles à combustible supportées de manière inerte.

13. Système de pile à combustible (1) selon l'une des revendications 1 à 12, au moins l'un des éléments de contact (7, 8) étant appliqué sur au moins une portion de pile à combustible électriquement conductrice disposée à l'intérieur du corps porteur de forme tubulaire et reliée de manière électrique avec l'une des électrodes (4a, 4b), notamment sur au moins l'une des électrodes (4a, 4b) disposées à l'intérieur du corps porteur de forme tubulaire.

14. Élément de contact (7, 8) métallique qui entre en contact avec au moins une électrode (4a, 4b, 24a, 24a', 24b, 24b') d'un système de pile à combustible (1) selon la revendication 1, l'élément de contact (7, 8) métallique étant réalisé sous la forme d'un élément en tôle, possédant
- au moins une portion de contact d'électrode (E1, E2, E3) et
- au moins une portion d'élément jointif (S1, S2, S3).

15. Procédé d'établissement de contact électrique avec un système de pile à combustible (1) selon la revendication 1, comprenant les étapes suivantes :
a) connexion, notamment soudage, d'au moins un élément de contact (7, 8) métallique selon la revendication 14, avec au moins une électrode (4a, 4b) d'une pile à combustible (3a, 3b), avec un corps porteur de forme tubulaire ou avec au moins une portion électriquement conductrice de pile à combustible (32) reliée électriquement avec l'une des électrodes (4a, 4b) d'une pile à combustible (3a, 3b) pourvue d'un corps porteur de forme tubulaire,
b) connexion, notamment soudage, de l'élément de contact métallique avec au moins un élément d'isolation (5, 6) électriquement isolant appliqué sur un substrat porteur (2),
de préférence de telle sorte qu'au moins l'un des éléments de contact (7, 8) est disposé avec un écart par rapport au substrat porteur (2).
